# EUROPEAN PATENT APPLICATION

(11) **EP 4 838 949 A1**
(43) Date of publication of application: **11.11.2026**
(21) Application number: 24914628.3
(22) Date of filing: 04.01.2024
(51) Int. Cl.: H04W 36/00

(54) **COMMUNICATION METHOD, TERMINAL DEVICE, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2024/070677
(87) International publication number: WO 2025/145398

(57) **Abstract**

The embodiments of the present disclosure relate to a communication method, a terminal device, a network device, a communication system and a storage medium. The communication method can be applied to a terminal device. The method comprises: receiving first information, wherein the first information is associated with a mobility configuration corresponding to first-type mobility and a mobility configuration corresponding to second-type mobility. Therefore, in the embodiments of the present disclosure, a mobility configuration corresponding to first-type mobility is associated with a mobility configuration corresponding to second-type mobility, and the first-type mobility and the second-type mobility can share the mobility configurations on the basis of first information, thereby reducing signaling overheads, and reducing the waste of storage resources during storage mobility configuration of a terminal device.

## Description

### TECHNICAL FIELD

The present disclosure relates to the technical field of communications, and in particular, to a communication method, a terminal device, a network device, a communication system, and a storage medium.

### BACKGROUND

With the development of wireless communication systems, mobility enhancement technologies have been introduced to improve the efficiency and stability of handover of a terminal between different cells. These mobility enhancement technologies include, for example, layer 1/layer 2 triggered mobility (LTM), condition-triggered layer 3 mobility, etc., where the condition-triggered layer 3 mobility includes conditional handover (CHO), conditional primary secondary cell addition/change (CPAC), etc. In LTM, a network side can provide a terminal with multiple candidate cells (or candidate cell groups). The network side can subsequently control, through layer 1 (L1) signaling or layer 2 (L2) signaling, the terminal to perform a change among the multiple candidate cells (or candidate cell groups), so as to change a serving cell of the terminal.

### SUMMARY

In a process of the network side performing mobility configuration for LTM and the condition-triggered layer 3 mobility, the same candidate cell or candidate cell group may be configured for the LTM and the condition-triggered layer 3 mobility, which makes signaling overhead relatively high.

The embodiments of the present disclosure provide a communication method, a terminal device, a network device, a communication system, and a storage medium, which can be used for configuring mobility.

According to a first aspect of the embodiments of the present disclosure, a communication method is provided, applied to a terminal device, the method including:
receiving first information, where the first information is associated with a mobility configuration corresponding to a first-type mobility and a mobility configuration corresponding to a second-type mobility.

According to a second aspect of the embodiments of the present disclosure, a communication method is provided, applied to a network device, the method including:
sending first information, where the first information is associated with a mobility configuration corresponding to a first-type mobility and a mobility configuration corresponding to a second-type mobility.

According to a third aspect of the embodiments of the present disclosure, a terminal device is provided, including: a first transceiver module, configured to receive first information, where the first information is associated with a mobility configuration corresponding to a first-type mobility and a mobility configuration corresponding to a second-type mobility.

According to a fourth aspect of the embodiments of the present disclosure, a network device is provided, including: a second transceiver module, configured to send first information, where the first information is associated with a mobility configuration corresponding to a first-type mobility and a mobility configuration corresponding to a second-type mobility.

According to a third aspect of the embodiments of the present disclosure, a terminal device is provided, including: one or more processors; where the terminal device is configured to perform the communication method according to the first aspect.

According to a fourth aspect of the embodiments of the present disclosure, a network device is provided, including: one or more processors; where the network device is configured to perform the communication method according to the second aspect.

According to a fifth aspect of the embodiments of the present disclosure, a communication system is provided, including a terminal device and a network device, where the terminal device is configured to implement the communication method according to the first aspect, and the network device is configured to implement the communication method according to the second aspect.

According to a sixth aspect of the embodiments of the present disclosure, a storage medium is provided, where the storage medium stores instructions, and when the instructions are run on a terminal device or a network device, causing the terminal device or the network device to perform the communication method according to the first aspect and the second aspect.

In the embodiments of the present disclosure, LTM or the condition-triggered layer 3 mobility is performed based on the first information, thereby reducing signaling overhead.

### BRIEF DESCRIPTION OF THE DRAWINGS

In order to more clearly describe the technical solutions in the embodiments of the present disclosure, the following introduces the drawings required for the description of the embodiments. The following drawings are merely some embodiments of the present disclosure, and do not constitute specific limitations on the protection scope of the present disclosure.
FIG. 1A is a schematic architectural diagram of a communication system according to an embodiment of the present disclosure.
FIG. 1B is a schematic diagram of a system architecture of EPC-based MR-DC according to an embodiment of the present disclosure.
FIG. 1C is a schematic diagram of a system architecture of 5GC-based MR-DC according to an embodiment of the present disclosure.
FIG. 1D is a schematic diagram of cells in dual connectivity according to an embodiment of the present disclosure.
FIG. 2A is a first schematic interaction diagram of a communication method according to an embodiment of the present disclosure.
FIG. 2B is a second schematic interaction diagram of a communication method according to an embodiment of the present disclosure.
FIG. 2C is a third schematic interaction diagram of a communication method according to an embodiment of the present disclosure.
FIG. 2D is a fourth schematic interaction diagram of a communication method according to an embodiment of the present disclosure.
FIG. 2E is a fifth schematic interaction diagram of a communication method according to an embodiment of the present disclosure.
FIG. 3A is a schematic flowchart of performing a communication method at a terminal device side according to an embodiment of the present disclosure.
FIG. 3B is a schematic flowchart of performing a communication method at a network device side according to an embodiment of the present disclosure.
FIG. 4A is another schematic flowchart of performing a communication method at a terminal device side according to an embodiment of the present disclosure.
FIG. 4B is another schematic flowchart of performing a communication method at a network device side according to an embodiment of the present disclosure.
FIG. 5 is a schematic structural diagram of a communication device provided by an embodiment of the present disclosure.
FIG. 6A is a schematic structural diagram of a communication device provided by an embodiment of the present disclosure.
FIG. 6B is a schematic structural diagram of a chip provided by an embodiment of the present disclosure.

### DETAILED DESCRIPTION

The embodiments of the present disclosure provide a communication method, a terminal device, a network device, a communication system, and a storage medium.

In a first aspect, an embodiment of the present disclosure provides a communication method, applied to a terminal device, the method including: receiving first information, where the first information is associated with a mobility configuration corresponding to a first-type mobility and a mobility configuration corresponding to a second-type mobility.

In the embodiments of the present disclosure, the terminal device receives the first information. Since the first information is associated with both the mobility configuration corresponding to the first-type mobility and the mobility configuration corresponding to the second-type mobility, the first-type mobility and the second-type mobility can implement sharing of the mobility configuration based on the first information. In this way, a mobility configuration used for one mobility can be used for multiple mobilities, thereby reducing signaling overhead and reducing waste of storage resources by the terminal device in a process of storing the mobility configuration.

In some embodiments, with reference to the first aspect, the first information is carried in configuration information of the first-type mobility, and the first information is used for indicating that the mobility configuration corresponding to the first-type mobility is associated with the second-type mobility, or the first information is used for indicating that the mobility configuration corresponding to the second-type mobility is associated with the first-type mobility.

In the embodiments of the present disclosure, by carrying the first information in the configuration information of the first-type mobility, the mobility configuration corresponding to the first-type mobility is associated with the second-type mobility, or the mobility configuration corresponding to the second-type mobility is associated with the first-type mobility. In this way, the mobility configuration corresponding to the first-type mobility can be used for the second-type mobility, and the mobility configuration corresponding to the second-type mobility can also be used for the first-type mobility. More flexible mobility management is implemented for the terminal, thereby improving system performance.

In some embodiments, with reference to the first aspect, the configuration information of the first-type mobility further carries: the mobility configuration corresponding to the first-type mobility, and the first information is used for indicating that the mobility configuration corresponding to the first-type mobility is associated with the second-type mobility.

In the embodiments of the present disclosure, the configuration information of the first-type mobility includes the first information and the mobility configuration corresponding to the first-type mobility, and the first information indicates that the mobility configuration corresponding to the first-type mobility is associated with the second-type mobility. In this way, the mobility configuration corresponding to the first-type mobility can be used for the second-type mobility, and more flexible mobility management is implemented for the terminal, thereby improving system performance.

In some embodiments, with reference to the first aspect, in a case that the second-type mobility is triggered, the second-type mobility is performed based on the mobility configuration corresponding to the first-type mobility.

In the embodiments of the present disclosure, the second-type mobility is performed based on the mobility configuration corresponding to the first-type mobility, thereby reducing waste of storage of the mobility configuration on storage resources of the terminal and improving system performance without affecting mobility management of the terminal.

In some embodiments, with reference to the first aspect, the mobility configuration corresponding to the second-type mobility is carried in configuration information of the second-type mobility, and the first information is used for indicating that the mobility configuration corresponding to the second-type mobility is associated with the first-type mobility.

In some embodiments, with reference to the first aspect, in a case that the first-type mobility is triggered, the first-type mobility is performed based on the mobility configuration corresponding to the second-type mobility.

In some embodiments, with reference to the first aspect, in a case that at least one of the following conditions is satisfied, the first information is configured: the terminal device and/or a network device supports the first information being associated with the mobility configuration corresponding to the first-type mobility and the mobility configuration corresponding to the second-type mobility; a first-type mobility and a second-type mobility associated with a candidate cell configured by the network device support a subsequent mobility operation; a candidate cell associated with the mobility configuration corresponding to the first-type mobility and a candidate cell associated with the mobility configuration corresponding to the second-type mobility are the same type of cell; the mobility configuration corresponding to the first-type mobility is configured; and the mobility configuration corresponding to the second-type mobility is configured.

In the embodiments of the present disclosure, the first information is configured when conditions are satisfied, thereby improving the configuration accuracy and effectiveness of the first information, and ensuring the accuracy and effectiveness of the first information associating the mobility configuration corresponding to the first-type mobility with the mobility configuration corresponding to the second-type mobility.

In some embodiments, with reference to the first aspect, the first-type mobility is a condition-triggered layer 3 mobility, and the second-type mobility is a layer 1 or layer 2 triggered mobility; or, the first-type mobility is a layer 1 or layer 2 triggered mobility, and the second-type mobility is a condition-triggered layer 3 mobility.

In some embodiments, with reference to the first aspect, the first-type mobility supports a subsequent mobility operation; in a case that the terminal device successfully accesses a candidate cell by performing the first-type mobility, the communication method further includes at least one of: deleting configuration information of the first-type mobility; deleting configuration information of the second-type mobility; adding the mobility configuration corresponding to the first-type mobility to the configuration information of the second-type mobility; and adding the mobility configuration corresponding to the first-type mobility to the configuration information corresponding to the second-type mobility; where the mobility configuration corresponding to the first-type mobility is associated with the mobility configuration corresponding to the second-type mobility.

In the embodiments of the present disclosure, the first-type mobility and/or the second-type mobility are deleted. In a case that the deleted mobility configuration includes the first information, the deleted mobility configuration can be added to a retained mobility configuration, so as to ensure subsequent effectiveness of the retained mobility configuration.

In some embodiments, with reference to the first aspect, the first-type mobility supports a subsequent mobility operation; the communication method further includes: receiving a first instruction, where the first instruction is used for indicating at least one of: deleting configuration information of the first-type mobility; deleting configuration information of the second-type mobility; updating the configuration information of the first-type mobility; and updating the configuration information of the second-type mobility.

In the embodiments of the present disclosure, the processing of the mobility configuration can be performed when the terminal device satisfies a condition(s), or can be performed based on the received first instruction to delete or update the mobility configuration, thereby improving the processing efficiency and processing flexibility of the mobility configuration and improving mobility performance.

In some embodiments, with reference to the first aspect, the mobility configuration includes at least one of: a candidate configuration and an execution condition.

In a second aspect, an embodiment of the present disclosure provides a communication method, applied to a network device, the method including: sending first information, where the first information is associated with a mobility configuration corresponding to a first-type mobility and a mobility configuration corresponding to a second-type mobility.

In some embodiments, with reference to the second aspect, the first information is carried in configuration information of the first-type mobility, and the first information is used for indicating that the mobility configuration corresponding to the first-type mobility is associated with the second-type mobility, or the mobility configuration corresponding to the second-type mobility is associated with the first-type mobility.

In some embodiments, with reference to the second aspect, the configuration information of the first-type mobility further carries the mobility configuration corresponding to the first-type mobility, and the first information is used for indicating that the mobility configuration corresponding to the first-type mobility is associated with the second-type mobility.

In some embodiments, with reference to the second aspect, the mobility configuration corresponding to the first-type mobility is used for, in a case that the second-type mobility is triggered, performing the second-type mobility.

In some embodiments, with reference to the second aspect, the mobility configuration corresponding to the second-type mobility is carried in configuration information of the second-type mobility, and the first information is used for indicating that the mobility configuration corresponding to the second-type mobility is associated with the first-type mobility.

In some embodiments, with reference to the second aspect, the mobility configuration corresponding to the second-type mobility is used for, in a case that the first-type mobility is triggered, performing the first-type mobility.

In some embodiments, with reference to the second aspect, in a case that at least one of the following conditions is satisfied, the first information is configured: the terminal device and/or the network device supports the first information being associated with the mobility configuration corresponding to the first-type mobility and the mobility configuration corresponding to the second-type mobility; a first-type mobility and a second-type mobility associated with a candidate cell configured by the network device support a subsequent mobility operation; a candidate cell associated with the mobility configuration corresponding to the first-type mobility and a candidate cell associated with the mobility configuration corresponding to the second-type mobility are the same type of cell; the mobility configuration corresponding to the first-type mobility is configured; and the mobility configuration corresponding to the second-type mobility is configured.

In some embodiments, with reference to the second aspect, the first-type mobility is a condition-triggered layer 3 mobility, and the second-type mobility is a layer 1 or layer 2 triggered mobility; or, the first-type mobility is a layer 1 or layer 2 triggered mobility, and the second-type mobility is a condition-triggered layer 3 mobility.

In some embodiments, with reference to the second aspect, the first-type mobility supports a subsequent mobility operation; the method further includes: sending a first instruction, where the first instruction is used for indicating at least one of: the terminal device deleting the configuration information of the first-type mobility; the terminal device deleting the configuration information of the second-type mobility; the terminal device updating the configuration information of the first-type mobility; and the terminal device updating the configuration information of the second-type mobility.

In some embodiments, with reference to the second aspect, the mobility configuration includes at least one of: a candidate configuration and an execution condition.

In a third aspect, an embodiment of the present disclosure provides a terminal device, including: a first transceiver module, configured to receive first information, where the first information is associated with a mobility configuration corresponding to a first-type mobility and a mobility configuration corresponding to a second-type mobility.

In some embodiments, with reference to the third aspect, the first information is carried in configuration information of the first-type mobility, and the first information is used for indicating that the mobility configuration corresponding to the first-type mobility is associated with the second-type mobility, or the mobility configuration corresponding to the second-type mobility is associated with the first-type mobility.

In some embodiments, with reference to the third aspect, the configuration information of the first-type mobility further carries the mobility configuration corresponding to the first-type mobility, and the first information is used for indicating that the mobility configuration corresponding to the first-type mobility is associated with the second-type mobility.

In some embodiments, with reference to the third aspect, the first transceiver module is configured to, in a case that the second-type mobility is triggered, perform the second-type mobility based on the mobility configuration corresponding to the first-type mobility.

In some embodiments, with reference to the third aspect, the mobility configuration corresponding to the second-type mobility is carried in configuration information of the second-type mobility, and the first information is used for indicating that the mobility configuration corresponding to the second-type mobility is associated with the first-type mobility.

In some embodiments, with reference to the third aspect, the first transceiver module is configured to, in a case that the first-type mobility is triggered, perform the first-type mobility based on the mobility configuration corresponding to the second-type mobility.

In some embodiments, with reference to the third aspect, in a case that at least one of the following conditions is satisfied, the first information is configured: the terminal device and/or a network device supports the first information being associated with the mobility configuration corresponding to the first-type mobility and the mobility configuration corresponding to the second-type mobility; a first-type mobility and a second-type mobility associated with a candidate cell configured by the network device support a subsequent mobility operation; a candidate cell associated with the mobility configuration corresponding to the first-type mobility and a candidate cell associated with the mobility configuration corresponding to the second-type mobility are the same type of cell; the mobility configuration corresponding to the first-type mobility is configured; and the mobility configuration corresponding to the second-type mobility is configured.

In some embodiments, with reference to the third aspect, the first-type mobility is a condition-triggered layer 3 mobility, and the second-type mobility is a layer 1 or layer 2 triggered mobility; or, the first-type mobility is a layer 1 or layer 2 triggered mobility, and the second-type mobility is a condition-triggered layer 3 mobility.

In some embodiments, with reference to the third aspect, the first-type mobility supports a subsequent mobility operation; in a case that the terminal device successfully accesses a candidate cell by performing the first-type mobility, the first transceiver module is configured to perform at least one of: deleting configuration information of the first-type mobility; deleting configuration information of the second-type mobility; adding the mobility configuration corresponding to the first-type mobility to the configuration information of the second-type mobility; and adding the mobility configuration corresponding to the second-type mobility to the configuration information of the first-type mobility; where the mobility configuration corresponding to the first-type mobility is associated with the mobility configuration corresponding to the second-type mobility.

In some embodiments, with reference to the third aspect, the first-type mobility supports a subsequent mobility operation; the first transceiver module is configured to receive a first instruction, where the first instruction is used for indicating at least one of: deleting configuration information of the first-type mobility; deleting configuration information of the second-type mobility; updating the configuration information of the first-type mobility; and updating the configuration information of the second-type mobility.

In some embodiments, with reference to the third aspect, the mobility configuration includes at least one of: a candidate configuration and an execution condition.

In a fourth aspect, an embodiment of the present disclosure provides a network device, including: a second transceiver module, configured to send first information, where the first information is associated with a mobility configuration corresponding to a first-type mobility and a mobility configuration corresponding to a second-type mobility.

In some embodiments, with reference to the fourth aspect, the first information is carried in configuration information of the first-type mobility, and the first information is used for indicating that the mobility configuration corresponding to the first-type mobility is associated with the second-type mobility, or the mobility configuration corresponding to the second-type mobility is associated with the first-type mobility.

In some embodiments, with reference to the fourth aspect, the mobility configuration corresponding to the first-type mobility is used for, in a case that the second-type mobility is triggered, performing the second-type mobility.

In some embodiments, with reference to the fourth aspect, the mobility configuration corresponding to the second-type mobility is carried in configuration information of the second-type mobility, and the first information is used for indicating that the mobility configuration corresponding to the second-type mobility is associated with the first-type mobility.

In some embodiments, with reference to the fourth aspect, the first transceiver module is configured to, in a case that the first-type mobility is triggered, perform the first-type mobility based on the mobility configuration corresponding to the second-type mobility.

In some embodiments, with reference to the fourth aspect, in a case that at least one of the following conditions is satisfied, the second transceiver module is configured to configure the first information: the terminal device and/or the network device supports the first information being associated with the mobility configuration corresponding to the first-type mobility and the mobility configuration corresponding to the second-type mobility; a first-type mobility and a second-type mobility associated with a candidate cell configured by the network device support a subsequent mobility operation; a candidate cell associated with the mobility configuration corresponding to the first-type mobility and a candidate cell associated with the mobility configuration corresponding to the second-type mobility are the same type of cell; the mobility configuration corresponding to the first-type mobility is configured; and the mobility configuration corresponding to the second-type mobility is configured.

In some embodiments, with reference to the fourth aspect, the first-type mobility is a condition-triggered layer 3 mobility, and the second-type mobility is a layer 1 or layer 2 triggered mobility; or, the first-type mobility is a layer 1 or layer 2 triggered mobility, and the second-type mobility is a condition-triggered layer 3 mobility.

In some embodiments, with reference to the fourth aspect, the first-type mobility supports a subsequent mobility operation; the second transceiver module is configured to send a first instruction, where the first instruction is used for indicating at least one of: the terminal device deleting the configuration information of the first-type mobility; the terminal device deleting the configuration information of the second-type mobility; the terminal device updating the configuration information of the first-type mobility; and the terminal device updating the configuration information of the second-type mobility.

In some embodiments, with reference to the fourth aspect, the mobility configuration includes at least one of: a candidate configuration and an execution condition.

In a fifth aspect, an embodiment of the present disclosure provides a terminal device, including: one or more processors; where the terminal device is configured to perform the optional implementations of the first aspect.

In a sixth aspect, an embodiment of the present disclosure provides a network device, including: one or more processors; where the network device is configured to perform the optional implementations of the second aspect.

In a seventh aspect, an embodiment of the present disclosure provides a communication system, including: a terminal device and a network device; where the terminal device is configured to perform the method as described in the optional implementations of the first aspect, and the network device is configured to perform the method as described in the optional implementations of the second aspect.

In an eighth aspect, an embodiment of the present disclosure provides a storage medium, where the storage medium stores instructions, and when the instructions are run on a terminal device or a network device, causing the terminal device or the network device to perform the method as described in the optional implementations of the first aspect and the second aspect.

In a ninth aspect, an embodiment of the present disclosure provides a program product, and when the program product is executed by a terminal device or a network device, causing the terminal device or the network device to perform the method as described in the optional implementations of the first aspect and the second aspect.

In a tenth aspect, an embodiment of the present disclosure provides a computer program, and when the computer program is run on a computer, causing the computer to perform the method as described in the optional implementations of the first aspect and the second aspect.

In an eleventh aspect, an embodiment of the present disclosure provides a chip or a chip system. The chip or the chip system includes a processing circuit, configured to perform the method as described in the optional implementations of the first aspect and the second aspect.

It can be understood that the terminal device, the network device, the communication system, the storage medium, the program product, the computer program, the chip, or the chip system are all configured to perform the method provided by the embodiments of the present disclosure. Therefore, for the beneficial effects that can be achieved thereby, reference can be made to the beneficial effects in the corresponding method, which will not be repeated here.

The embodiments of the present disclosure provide a communication method, a terminal device, a network device, a communication system, and a storage medium. In some embodiments, terms such as the communication method, an information processing method, and a configuration method for configuration information can be replaced with each other, and terms such as an information processing system and a communication system can be replaced with each other.

The embodiments of the present disclosure are not exhaustive, and are merely illustrative of some embodiments, and are not intended as specific limitations on the protection scope of the present disclosure. In the absence of contradiction, each step in a certain embodiment can be implemented as an independent embodiment, and the steps can be arbitrarily combined with each other. For example, a solution after removing some steps in a certain embodiment can also be implemented as an independent embodiment, and the order of the steps in a certain embodiment can be arbitrarily exchanged. In addition, optional implementations in a certain embodiment can be arbitrarily combined. Furthermore, the embodiments can be arbitrarily combined with each other. For example, some or all steps of different embodiments can be arbitrarily combined, and a certain embodiment can be arbitrarily combined with optional implementations of other embodiments.

In the embodiments of the present disclosure, unless otherwise specified and unless there is a logical conflict, the terms and/or descriptions between the embodiments are consistent and can be referenced to each other, and the technical features in different embodiments can be combined to form new embodiments according to their inherent logical relationships.

The terms used in the embodiments of the present disclosure are only for the purpose of describing specific embodiments, and are not intended as limitations on the present disclosure.

In the embodiments of the present disclosure, unless otherwise specified, elements expressed in singular form, such as "one", "a/an", "the", "above", "said", "aforementioned", "this", etc., can mean "one and only one", or can also mean "one or more", "at least one", etc. For example, when articles such as "a", "an", "the" in English are used in translation, the noun following the article can be understood as a singular expression or a plural expression.

In the embodiments of the present disclosure, "a plurality of" means two or more.

In some embodiments, terms such as "at least one of", "one or more", "a plurality of", "multiple", etc., can be replaced with each other.

In some embodiments, descriptive manners such as "at least one of A and B", "A and/or B", "in one case A, in another case B", "in response to one case A, in response to another case B", etc., can, depending on circumstances, include the following technical solutions: in some embodiments A (performing A regardless of B); in some embodiments B (performing B regardless of A); in some embodiments selecting and performing from A and B (A and B are selectively performed); in some embodiments A and B (both A and B are performed). When there are more branches such as A, B, C, etc., the situation is similar to the above.

In some embodiments, descriptive manners such as "A or B", etc., can, depending on circumstances, include the following technical solutions: in some embodiments A (performing A regardless of B); in some embodiments B (performing B regardless of A); in some embodiments selecting and performing from A and B (A and B are selectively performed). When there are more branches such as A, B, C, etc., the situation is similar to the above.

In the embodiments of the present disclosure, prefix words such as "first" and "second" are only used to distinguish different described objects, and do not constitute limitations on the position, order, priority, quantity, or content of the described objects. For the statements of the described objects, reference may be made to the descriptions in the context of the claims or embodiments, and no superfluous limitations should be constituted due to the use of prefix words. For example, if the described object is a "field", the ordinal numbers before "field" in "first field" and "second field" do not limit the position or order between the "fields", "first" and "second" do not limit whether the "fields" they modify are in the same message, and do not limit the sequential order of the "first field" and the "second field". For another example, if the described object is a "level", the ordinal numbers before "level" in "first level" and "second level" do not limit the priority between the "levels". For another example, the quantity of the described object is not limited by the ordinal numbers, and can be one or more. Taking "first device" as an example, the quantity of "device" therein can be one or more. In addition, objects modified by different prefix words can be the same or different. For example, if the described object is a "device", the "first device" and the "second device" can be the same device or different devices, and their types can be the same or different. For another example, if the described object is "information", the "first information" and the "second information" can be the same information or different information, and their content can be the same or different.

In some embodiments, "include A", "comprise A", "used for indicating A", and "carry A" can be interpreted as directly carrying A, or can be interpreted as indirectly indicating A.

In some embodiments, terms such as "in response to...", "in response to determining...", "in a case that...", "when...", "upon...", "if...", "in case...", etc., can be replaced with each other.

In some embodiments, terms such as "greater than", "greater than or equal to", "not less than", "more than", "more than or equal to", "not less than", "higher than", "higher than or equal to", "not lower than", "above", etc., can be replaced with each other, and terms such as "less than", "less than or equal to", "not greater than", "fewer than", "fewer than or equal to", "not more than", "lower than", "lower than or equal to", "not higher than", "below", etc., can be replaced with each other.

In some embodiments, an apparatus, etc., can be interpreted as physical or virtual, and its name is not limited to the names recited in the embodiments. Terms such as "apparatus", "equipment", "device", "circuit", "network element", "node", "function", "unit", "section", "system", "network", "chip", "chip system", "entity", "subject", etc., can be replaced with each other.

In some embodiments, "network" can be interpreted as devices included in the network (for example, access network devices, core network devices, etc.).

In some embodiments, terms such as "network device", "access network device (AN device)", "radio access network device (RAN device)", "base station (BS)", "radio base station", "fixed station", "node", "access network node", "access point", "transmission point (TP)", "reception point (RP)", "transmission and/or reception point (TRP)", "panel", "antenna panel", "antenna array", "cell", "macro cell", "small cell", "femtocell", "picocell", "sector", "cell group", "serving cell", "carrier", "component carrier", "bandwidth part (BWP)", etc., can be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc., can be replaced with each other.

In some embodiments, the access network device, the core network device, or the network device can be replaced with a terminal. For example, for a structure where communication between an access network device, a core network device, or a network device and a terminal is replaced with communication between multiple terminals (for example, device-to-device (D2D), vehicle-to-everything (V2X), etc.), the embodiments of the present disclosure can also be applied. In this case, a structure where the terminal has all or part of the functions of the access network device can also be adopted. In addition, terms such as "uplink" and "downlink" can also be replaced with terms corresponding to inter-terminal communication (for example, "side"). For example, an uplink channel, a downlink channel, etc., can be replaced with a sidelink channel, and an uplink, a downlink, etc., can be replaced with a sidelink.

In some embodiments, the terminal can be replaced with an access network device, a core network device, or a network device. In this case, a structure where the access network device, the core network device, or the network device has all or part of the functions of the terminal can also be adopted.

In some embodiments, the acquisition of data, information, etc., shall comply with the laws and regulations of the country where it is located.

In some embodiments, data, information, etc., can be acquired after obtaining user consent.

In addition, each element, each row, or each column in the tables of the embodiments of the present disclosure can be implemented as an independent embodiment, and any combination of any elements, any rows, and any columns can also be implemented as an independent embodiment.

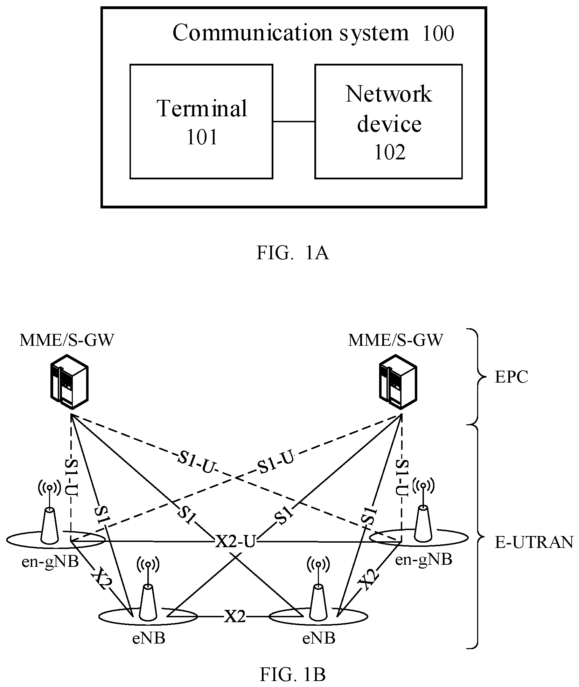

FIG. 1A is a schematic architectural diagram of a communication system according to an embodiment of the present disclosure.

As shown in FIG. 1A, a communication system 100 includes a terminal 101 and a network device 102. The network device 102 can also be referred to as an access network device.

In some embodiments, the terminal 101 includes, for example, at least one of a mobile phone, a wearable device, an Internet of Things device, an automobile with communication functions, a smart car, a tablet computer (Pad), a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but is not limited thereto.

In some embodiments, the network device 102 is, for example, a node or device that connects a terminal to a wireless network, and the network device 102 can include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN base station, a Cloud RAN base station, a base station in other communication systems, and an access node in a Wi-Fi system, but is not limited thereto.

In some embodiments, the network device 102 can be composed of a central unit (CU) and a distributed unit (DU), where the CU can also be referred to as a control unit. By adopting the CU-DU structure, the protocol layers of the network device 102 can be split apart, functions of some protocol layers are placed in the CU for centralized control, and the remaining functions of some or all protocol layers are distributed in the DU, with the CU centrally controlling the DU, but the present disclosure is not limited thereto.

In some embodiments, the CU and the DU can be centrally deployed in one network device, or can be distributedly deployed in multiple network devices.

In some embodiments, one network device 102 can include one CU and at least one DU. One CU can be connected to multiple DUs, and one DU can only be connected to one CU.

It can be understood that the communication system described in the embodiments of the present disclosure is for more clearly illustrating the technical solutions of the embodiments of the present disclosure, and does not constitute a limitation on the technical solutions provided by the embodiments of the present disclosure. A person of ordinary skill in the art can know that, with the evolution of system architecture and the emergence of new service scenarios, the technical solutions provided by the embodiments of the present disclosure are also applicable to similar technical problems.

The following embodiments of the present disclosure can be applied to the communication system 100 shown in FIG. 1A, or to some subjects thereof, but are not limited thereto. The subjects shown in FIG. 1A are illustrative, and the communication system can include all or some of the subjects in FIG. 1A, or can also include other subjects not shown in FIG. 1A. The quantity and form of each subject are arbitrary. Each subject can be physical or virtual. The connection relationships between the subjects are illustrative, and the subjects can be not connected or connected, and the connection can be in any manner, can be direct or indirect, and can be wired or wireless.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems utilizing other communication methods, and next-generation systems extended based on them, etc. In addition, a combination of multiple systems (for example, a combination of LTE or LTE-A and 5G, etc.) can also be applied.

Below, the terms involved in the present disclosure are described and explained.

### I. Introduction to multi-radio dual connectivity (MR-DC):

MR-DC is a generalized intra-evolved universal terrestrial radio access (intra-E-UTRA) dual connectivity.

In some embodiments, based on MR-DC, the terminal can utilize radio resources provided by two different schedulers, which are located at two different next generation radio access network (NG-RAN) nodes and connected through a non-ideal backhaul, where one provides NR access and the other provides E-UTRA or NR access. One serves as a master node (MN) and the other serves as a secondary node (SN). The MN and the SN are connected through a network interface, where at least the MN is connected to a core network.

### (1) MR-DC with evolved packet core (EPC) (MR-DC with EPC):

For example, FIG. 1B is a schematic diagram of a system architecture of EPC-based MR-DC according to an embodiment of the present disclosure. As shown in FIG. 1B, an evolved-universal terrestrial radio access network (E-UTRAN) supports MR-DC through E-UTRA-NR dual connectivity (EN-DC). The terminal is connected to an eNB serving as the MN and an en-gNB serving as the SN. The eNB is connected to the EPC through an S1 interface and is connected to the en-gNB through an X2 interface. The en-gNB can also be connected to the EPC through an S1-U interface and can also be connected to other en-gNBs through an X2-U interface. In some embodiments, the EPC of a long term evolution (LTE) system can include a mobility management entity (MME), a serving gateway (S-GW), etc.

It should be noted that the quantity of each communication device in the system shown in FIG. 1B is only used as an example, the quantity of each communication device can also be more, and the connection relationships can also be changed according to actual circumstances. The example of FIG. 1B does not serve as a limitation on the system architecture provided by the embodiments of the present disclosure.

### (2) MR-DC with 5G core (5GC) (MR-DC with 5GC):

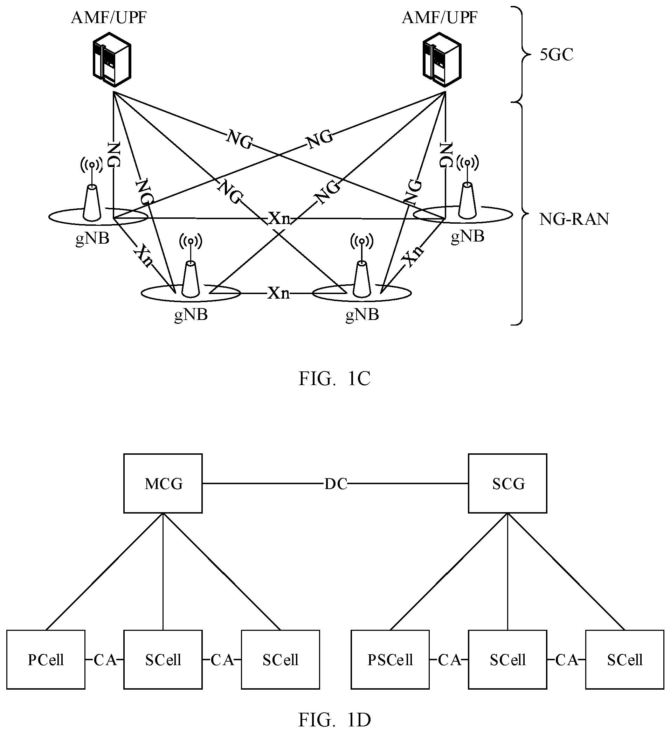

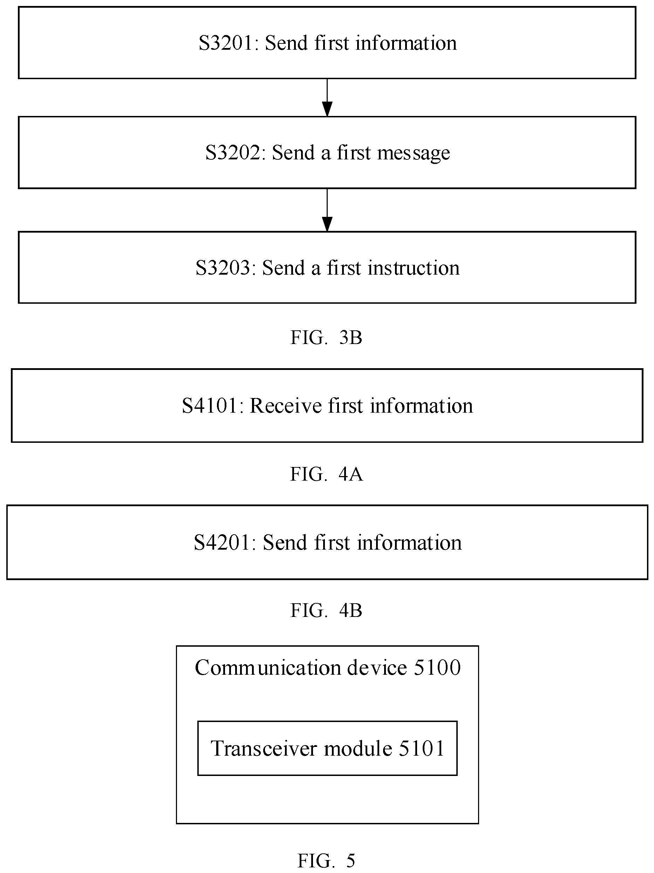

For example, FIG. 1C is a schematic diagram of a system architecture of 5GC-based MR-DC according to an embodiment of the present disclosure. As shown in FIG. 1C, 5GC-based MR-DC can be classified into the following three cases:

### A) E-UTRA-NR dual connectivity (EN-DC):

NG-RAN supports NG-RAN E-UTRA-NR dual connectivity, which, in some embodiments, can also be referred to as NGEN-DC. The terminal is connected to an ng-eNB serving as the MN and a gNB serving as the SN. The ng-eNB is connected to the 5GC, and the gNB is connected to the ng-eNB through an Xn interface.

### B) NR-E-UTRA dual connectivity (NE-DC):

NG-RAN supports NR-E-UTRA dual connectivity. The terminal is connected to a gNB serving as the MN and an ng-eNB serving as the SN. The gNB is connected to the 5GC, and the ng-eNB is connected to the gNB through an Xn interface.

### C) NR-NR dual connectivity (NR-DC):

NG-RAN supports NR-NR dual connectivity. The terminal is connected to one gNB serving as the MN and another gNB serving as the SN. The master gNB is connected to the 5GC through an NG interface, the two gNBs are connected through an Xn interface, and the secondary gNB can also be connected to the 5GC through an NG-U interface. In addition, NR-DC can also be used for the terminal to access a single gNB, which simultaneously serves as the MN and the SN, and simultaneously configures a master cell group (MCG) and a secondary cell group (SCG).

In some embodiments, the 5GC of a 5G NR system can include an access and mobility management function (AMF), a user plane function (UPF), etc.

It should be noted that the quantity of each communication device in the system shown in FIG. 1C is only used as an example, the quantity of each communication device can also be more, and the connection relationships can also be changed according to actual circumstances. The example of FIG. 1C does not serve as a limitation on the system architecture provided by the embodiments of the present disclosure.

Under dual connectivity, the terminal can access two cell groups. For example, FIG. 1D is a schematic diagram of cells in dual connectivity according to an embodiment of the present disclosure. As shown in FIG. 1D, in some embodiments, the two cell groups in dual connectivity are an MCG and an SCG, respectively. Under the MCG, there can be many cells or cell groups, among which there is one cell used for initiating initial access.

In some embodiments, this cell is referred to as a primary cell (PCell). As the name implies, the PCell is the most "primary" cell in the MCG. The PCell under the MCG and secondary cells (SCells) under the MCG are combined together through carrier aggregation (CA). The MCG includes a primary cell (PCell) and secondary cells (SCells).

In some embodiments, the SCG includes a primary secondary cell (PSCell) and secondary cells (SCells). Because many signalings are only sent on the PCell and the PSCell, for convenience of description, a concept is also defined in the relevant communication protocols, i.e., a special cell (sPCell), and the PCell and the PSCell are collectively referred to as the sPCell.

It should be noted that the quantity of cells in dual connectivity shown in FIG. 1D is only used as an example, the quantity of cells under the master cell group and the secondary cell group can also be more, and the connection relationships can also be changed according to actual circumstances. The example of FIG. 1D does not serve as a limitation on the cells in dual connectivity provided by the embodiments of the present disclosure.

### II. Introduction to layer 1 (L1) or layer 2 (L2) triggered mobility (L1/L2-triggered mobility, LTM):

In a communication system, a network side can provide a terminal with multiple "candidate cells" (or "candidate cell groups"). In some embodiments, the network side can subsequently control, through L1 signaling (for example, downlink control information (DCI)) or L2 signaling (for example, a media access control (MAC) control element (CE)), the terminal to perform a change among the multiple "candidate cells (or candidate cell groups)". For example, a working cell (or cell group) is changed from "candidate cell (or candidate cell group)-1" to "candidate cell (or candidate cell group)-2". One serving cell (or serving cell group) can correspond to one or more "candidate cells (or candidate cell groups)". In some embodiments, the LTM procedure can reduce the mobility delay of the terminal.

In some embodiments, LTM is a PCell (or PSCell) cell switch procedure that the network triggers via a MAC CE based on L1 measurements.

In some embodiments, LTM can include subsequent LTM, where the subsequent LTM is a cell switch procedure between candidate cells, and in this procedure the network side does not need to reconfigure LTM for the UE.

In some embodiments, in the LTM procedure, a base station receives an L1 measurement report from the UE, and based on the measurement report, the base station changes the serving cell of the UE through a cell switch command carried in a MAC CE. The cell switch command indicates LTM candidate cell configurations that are pre-prepared by the base station and provided to the UE through RRC signaling. Next, the UE switches to a target cell according to the cell switch command.

In some embodiments, LTM can be used for triggering a change of the PCell or the MCG and/or a change of the PSCell or the SCG, and LTM can also be used for triggering a change of the SCell.

In some embodiments, LTM can also be triggered by the UE based on a condition, i.e., the UE determines whether to perform LTM based on whether the condition is satisfied.

It should be noted that terms such as "change", "alter", "switch", "mobility", etc., can be replaced with each other.

In some embodiments, in a communication system, layer 1 is a physical layer (PHY); layer 2 includes a MAC, a radio link control (RLC), and a packet data convergence protocol (PDCP); and layer 3 (L3) is a radio resource control (RRC) layer. In this case, in LTM, the network side pre-sends configuration information of candidate cells for LTM to the terminal through layer 3 signaling (such as RRC signaling). The network side receives a layer 1 (L1) measurement report from the terminal. On this basis, the network side sends a cell switch command through layer 2 signaling (such as a MAC CE) to change a serving cell of the terminal. In this case, the terminal triggers cell switching by selecting configuration information of a designated LTM candidate cell as configuration information of a target cell of the network side. The configuration information of the LTM candidate cell can only be added, modified, and released by the network side through RRC signaling.

In some embodiments, an "LTM candidate cell" can also be referred to as a "candidate cell", and the "candidate cell" is used for an LTM procedure of the terminal.

In some embodiments, the network side can configure multiple LTM candidate cells for the terminal by cell group. The multiple LTM candidate cells can belong to the same cell group or can belong to different cell groups. In some embodiments, an LTM candidate cell can also be referred to as an LTM candidate cell group.

In some embodiments, for one LTM candidate cell, the network side can configure an LTM candidate configuration, and the LTM candidate configuration can include, but is not limited to, at least one of the following: a configuration identifier, and a cell configuration corresponding to the configuration identifier. For example, the above configuration identifier can be used for indicating a cell configuration of the LTM candidate cell, and the configuration identifier can be understood as an index, an identity (ID), etc., of the cell configuration. The cell configuration corresponding to the above configuration identifier can be a candidate configuration corresponding to a target cell accessed when a mobility operation is triggered, configured by the network side for the terminal. In one embodiment, the LTM candidate configuration can be configured through RRC signaling, such as RRC configuration (e.g., RRC configuration or RRC reconfiguration).

In some embodiments, for one LTM candidate cell, the network side can further configure reference configuration information for the terminal. The LTM candidate configuration and the reference configuration of the same LTM candidate cell can be used for jointly determining a complete configuration of the LTM candidate cell. The terminal can determine the LTM candidate cell based on the complete configuration. In one embodiment, the reference configuration information can be configured through RRC signaling, such as RRC configuration (e.g., RRC configuration or RRC reconfiguration).

In some embodiments, the reference configuration can be understood as an incremental configuration of the LTM candidate configuration. The reference configuration can be a specific configuration generated by the network side, and the reference configuration can be a current configuration of the terminal. In some embodiments, for LTM, the network side configures the reference configuration of the cell for the terminal.

In some embodiments, in LTM, intra-node LTM (such as intra-DU LTM, intra-DU LTM, and intra-CU LTM) can be supported. Further, with the evolution of wireless technologies, LTM will also be extended to the following scenarios: inter-node LTM (such as inter-CU LTM), and conditional LTM (such as conditional LTM).

In some embodiments, the above "inter-node" can also be described as "inter-access network node", "inter-access network device", "inter-base station", "inter-CU", etc. In some embodiments, the above "intra-node" can also be described as "intra-access network node", "intra-access network device", "intra-base station", "inter-CU and DU", etc.

In some embodiments, an access network node associated with a serving cell (or a source cell) can be described as a serving access network node, a serving access network device, a serving base station, etc. In some embodiments, an access network node associated with a candidate cell can be described as a candidate access network node, a candidate access network device, a candidate base station, etc. In some embodiments, an access network node associated with a target cell can be described as a target access network node, a target access network device, a target base station, etc.

In some embodiments, the access network node associated with the target cell can be a target MN or a target SN corresponding to the target cell.

In the embodiments of the present disclosure, the access network node is described by taking a base station, i.e., a gNB, in a 5G system as an example to describe the communication method provided by the embodiments of the present disclosure. Certainly, the specific implementation of the access network node is not limited thereto.

In some embodiments, the configuration information of LTM (e.g., LTM-Config) includes:
one or more pieces of LTM candidate information (e.g., LTM-Candidate);
each piece of LTM candidate information includes:
   an LTM configuration identifier (e.g., ltm-CandidateId);
   an LTM candidate configuration (e.g., ltm-CandidateConfig) corresponding to an LTM candidate cell (or candidate cell group); and
   other configurations.

### III. Introduction to condition-triggered layer 3 (L3) mobility (hereinafter referred to as conditional reconfiguration):

The condition-triggered L3 mobility includes: conditional handover (CHO), conditional PSCell addition (CPA), and conditional PSCell change (CPC).

Conditional handover (CHO) refers to: a handover performed by the UE when one or more handover execution conditions are satisfied. The UE starts evaluating the execution conditions after receiving a CHO configuration, and stops evaluating the execution conditions after performing a handover (including a legacy handover and CHO).

CHO is applicable to the following criteria: a CHO configuration includes CHO candidate cell configurations and execution conditions; one execution condition may include one or two trigger conditions (CHO events A3/A5). CHO event A3 is that an offset of a candidate cell for conditional reconfiguration is better than that of a PCell/PSCell. CHO event A5 is that a PCell/PSCell is worse than an absolute threshold 1, and a candidate cell for conditional reconfiguration is better than an absolute threshold 2.

Before any CHO execution condition is satisfied, if the UE receives an HO (without a CHO configuration) command, it performs a legacy HO procedure regardless of any previously received CHO configuration. When performing CHO, i.e., from when the UE starts synchronizing with a target cell, the UE does not monitor a source cell.

Conditional PSCell addition (CPA) refers to: when an execution condition is satisfied, the UE performs PSCell addition. The UE starts evaluating the execution condition upon receiving a CPA configuration, and stops evaluating the execution condition once PCell addition or PCell change is triggered.

CPA is triggered by the MN, the execution condition of CPA is generated by the MN, and the execution condition corresponds to a measurement configuration associated with an MCG.

Conditional PSCell change (CPC) refers to: when an execution condition is satisfied, the UE performs PSCell change. The UE starts evaluating the execution condition after receiving a CPC configuration, and stops evaluating the execution condition once a PCell change occurs or a PCell change is triggered.

In some embodiments, inter-SN CPC initiated by the SN without participation of the MN is supported, and intra-SN CPC initiated by the MN or the SN is supported.

CPA and CPC can be collectively referred to as conditional PSCell addition or change (CPAC).

In conditional handover (CHO) and in conditional PSCell change (CPC)/conditional PSCell addition (CPA), the UE configured with a CHO/CPC/CPA configuration must release the CHO/CPC/CPA configuration when completing random access to a target PCell/PSCell. Therefore, if the network does not reconfigure and reinitialize CHO/CPC/CPA, the terminal has no opportunity to subsequently continue to perform CHO/CPC/CPA. This will increase the delay of handover or SCG change and increase signaling overhead, particularly in an FR2 scenario where CG is frequently changed.

Therefore, subsequent conditional handover/subsequent conditional PSCell addition or change (subsequent CHO/CPAC) has been proposed, where the subsequent CPAC is a conditional PSCell addition or change procedure performed based on a preconfigured subsequent CPAC configuration of candidate PSCells after PSCell addition, PSCell change, or SCG release, and in this procedure there is no need to reconfigure and restart CPC/CPA.

In some embodiments, for subsequent CPAC, after the UE performs one or more of operations such as PSCell addition, PSCell change, SCG release, PCell change, etc., the UE does not automatically delete corresponding configuration information of the conditional reconfiguration.

In some embodiments, the configuration information of the conditional reconfiguration (e.g., ConditionalReconfiguration) includes:
one or more pieces of candidate information of the conditional reconfiguration;
each piece of candidate information of the conditional reconfiguration includes:
   a conditional reconfiguration identifier (e.g., condReconfigId);
   a conditional reconfiguration candidate configuration (condRRCReconfig) corresponding to a conditional reconfiguration candidate cell (or candidate cell group); and
   other configurations.

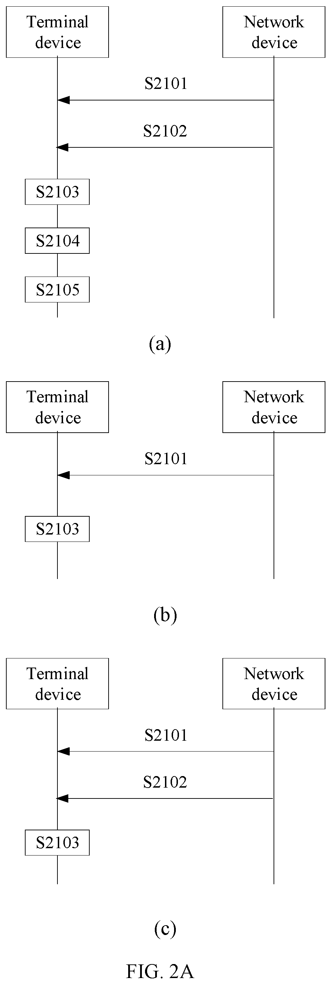

FIG. 2A is a first schematic interaction diagram of a communication method according to an embodiment of the present disclosure. As shown in (a) of FIG. 2A, the embodiment of the present disclosure relates to a communication method, and the method includes step S2101 to step S2105.

In step S2101, a network device sends first information.

In some embodiments, a terminal device receives the first information.

In some embodiments, the first information is used for being associated with a mobility configuration corresponding to a first-type mobility and a mobility configuration corresponding to a second-type mobility. That is, the first information can indicate that mobility configurations corresponding to multiple mobilities (for example, two mobilities) are associated with each other.

In some embodiments, the first-type mobility is LTM, and the second-type mobility is conditional reconfiguration.

In some embodiments, the first-type mobility is conditional reconfiguration, and the second-type mobility is LTM.

It should be understood that the cases of the first-type mobility and the second-type mobility are not limited to the above examples, and the present disclosure does not make limitations on this.

In some embodiments, the first information can be carried in configuration information of the first-type mobility, so as to indicate that the mobility configuration corresponding to the first-type mobility is associated with the second-type mobility, or indicate that the mobility configuration corresponding to the second-type mobility is associated with the first-type mobility. It should be understood that the configuration information of the first-type mobility can include the mobility configuration used for configuring the first-type mobility, so that the terminal directly obtains the mobility configuration corresponding to the first-type mobility according to the configuration information. Certainly, the configuration information of the first-type mobility can also not include the mobility configuration used for configuring the first-type mobility, and the terminal determines the mobility configuration corresponding to the first-type mobility according to the configuration information of the first-type mobility and other information. For example, the terminal can determine the mobility configuration corresponding to the first-type mobility according to the configuration information of the first-type mobility and the configuration information of the second-type mobility.

In addition, mobility configurations being associated with each other can refer to a mobility configuration of one mobility being associated with another mobility. For example, a first mobility configuration corresponding to the first-type mobility can be associated with the second-type mobility, or a second mobility configuration corresponding to the second-type mobility can be associated with the first-type mobility.

In one example, in a case that the first-type mobility is LTM and the second-type mobility is conditional reconfiguration, the configuration information of the first-type mobility can be LTM-Candidate. The first information is used for indicating that the mobility configuration corresponding to LTM (e.g., ltm-CandidateConfig) is associated with the conditional reconfiguration, or the first information can indicate that the mobility configuration corresponding to the conditional reconfiguration (e.g., condRRCReconfig) is associated with LTM.

In one example, in a case that the first-type mobility is conditional reconfiguration and the second-type mobility is LTM, the configuration information of the first-type mobility can be CondReconfigToAddMod, and the first information is used for indicating that the mobility configuration corresponding to the conditional reconfiguration (e.g., condRRCReconfig) is associated with LTM, or indicating that the mobility configuration corresponding to LTM (e.g., ltm-CandidateConfig) is associated with the conditional reconfiguration.

In some embodiments, in a case that the first information is carried in the configuration information of the first-type mobility, the configuration information of the first-type mobility further carries the mobility configuration corresponding to the first-type mobility. In this case, the first information is used for indicating that the mobility configuration corresponding to the first-type mobility can be used for the second-type mobility.

That is, the network device can send the mobility configuration corresponding to the first-type mobility (and the first information) to the terminal through the configuration information of the first-type mobility, and the terminal can learn, according to the first information, that the mobility configuration corresponding to the first-type mobility is also applicable to the second-type mobility, thereby being able to take it as the mobility configuration of the second-type mobility, and use the mobility configuration corresponding to the first-type mobility to configure the second-type mobility.

In one example, in a case that the first-type mobility is LTM and the second-type mobility is conditional reconfiguration, the configuration information of LTM (e.g., LTM-Candidate) includes the first information and the mobility configuration corresponding to LTM (e.g., ltm-CandidateConfig). In this case, the first information is used for indicating that the mobility configuration corresponding to LTM can be used for the conditional reconfiguration.

In one example, in a case that the first-type mobility is conditional reconfiguration and the second-type mobility is LTM, the configuration information of the conditional reconfiguration (e.g., CondReconfigToAddMod) carries the first information and the mobility configuration of the conditional reconfiguration (e.g., condRRCReconfig). In this case, the first information is used for indicating that the mobility configuration of the conditional reconfiguration can be used for LTM.

In some embodiments, in a case that the configuration information of the first-type mobility carries the first information and the mobility configuration corresponding to the first-type mobility, the terminal may not obtain the mobility configuration corresponding to the second-type mobility through the configuration information of the second-type mobility, i.e., the configuration information of the second-type mobility may not carry the mobility configuration corresponding to the second-type mobility. In this case, the first information is used for indicating that the mobility configuration corresponding to the first-type mobility can be used for the second-type mobility. The terminal can configure the second-type mobility through the mobility configuration corresponding to the first-type mobility. In some implementations, the terminal can take the mobility configuration corresponding to the first-type mobility as the mobility configuration corresponding to the second-type mobility, or the terminal can reuse a part of the mobility configuration corresponding to the first-type mobility as the mobility configuration corresponding to the second-type mobility.

In one example, in a case that the configuration information of LTM (e.g., LTM-Candidate) includes the first information and the mobility configuration corresponding to LTM (e.g., ltm-CandidateConfig), the configuration information of the conditional reconfiguration (e.g., CondReconfigToAddMod) does not carry the mobility configuration of the conditional reconfiguration (e.g., condRRCReconfig). In this case, the first information is used for indicating that the mobility configuration corresponding to LTM can be used for the conditional reconfiguration.

In one example, in a case that the configuration information of the conditional reconfiguration (e.g., CondReconfigToAddMod) carries the first information and the mobility configuration of the conditional reconfiguration (e.g., condRRCReconfig), the configuration information of LTM does not carry the mobility configuration of LTM (e.g., ltm-CandidateConfig). In this case, the first information is used for indicating that the mobility configuration of the conditional reconfiguration can be used for LTM.

In some embodiments, in a case that the configuration information of the first-type mobility carries the first information and the mobility configuration corresponding to the first-type mobility, the configuration information of the second-type mobility can carry the mobility configuration corresponding to the second-type mobility. In this case, the first information is used for indicating not to use the mobility configuration corresponding to the second-type mobility to perform the second-type mobility, but to use the mobility configuration corresponding to the first-type mobility to perform the second-type mobility.

In some embodiments, in a case that the configuration information of the first-type mobility carries the first information, the configuration information of the second-type mobility carries the mobility configuration corresponding to the second-type mobility. In this case, the first information is used for indicating that the mobility configuration corresponding to the second-type mobility can be used for the first-type mobility.

In summary, through the indication of the first information, the terminal can determine one of a first mobility configuration corresponding to the first-type mobility and a second mobility configuration corresponding to the second-type mobility by means of the other, without needing to respectively obtain the above first mobility configuration and second mobility configuration. The first-type mobility and the second-type mobility can respectively select LTM, conditional reconfiguration, etc.

In one example, in a case that the first-type mobility is LTM and the second-type mobility is conditional reconfiguration, the configuration information of LTM (e.g., LTM-Candidate) carries the first information. The configuration information of the conditional reconfiguration (e.g., CondReconfigToAddMod) carries the mobility configuration corresponding to the conditional reconfiguration (e.g., condRRCReconfig). In this case, the first information is used for indicating that the mobility configuration corresponding to the conditional reconfiguration can be used for LTM.

In one example, in a case that the first-type mobility is conditional reconfiguration and the second-type mobility is LTM, the configuration information of the conditional reconfiguration (e.g., CondReconfigToAddMod) carries the first information. The configuration information of LTM carries the mobility configuration corresponding to LTM (e.g., ltm-CandidateConfig). In this case, the first information is used for indicating that the mobility configuration corresponding to LTM can be used for the conditional reconfiguration.

In some embodiments, in a case that the configuration information of the first-type mobility carries the first information and the configuration information of the second-type mobility carries the mobility configuration corresponding to the second-type mobility, the configuration information of the first-type mobility may not carry the mobility configuration corresponding to the first-type mobility. In this case, the first information is used for indicating that the mobility configuration corresponding to the second-type mobility can be used for the first-type mobility. Thus, the terminal can configure the first-type mobility according to the mobility configuration corresponding to the second-type mobility. The mobility configuration corresponding to the second-type mobility can be directly taken as the mobility configuration for configuring the first-type mobility, or a part of the mobility configuration corresponding to the second-type mobility can be taken as the mobility configuration for configuring the first-type mobility.

In one example, in a case that the first-type mobility is LTM and the second-type mobility is conditional reconfiguration, the configuration information of LTM (e.g., LTM-Candidate) carries the first information, but does not carry the mobility configuration corresponding to LTM (e.g., ltm-CandidateConfig). The configuration information of the conditional reconfiguration (e.g., CondReconfigToAddMod) carries the mobility configuration corresponding to the conditional reconfiguration (e.g., condRRCReconfig). In this case, the first information is used for indicating that the mobility configuration corresponding to the conditional reconfiguration can be used for LTM.

In one example, in a case that the first-type mobility is conditional reconfiguration and the second-type mobility is LTM, the configuration information of the conditional reconfiguration (e.g., CondReconfigToAddMod) carries the first information, but does not carry the mobility configuration corresponding to the conditional reconfiguration (e.g., condRRCReconfig). The configuration information of LTM carries the mobility configuration corresponding to LTM (e.g., ltm-CandidateConfig). In this case, the first information is used for indicating that the mobility configuration corresponding to LTM can be used for the conditional reconfiguration. In some embodiments, in a case that the first information is carried in the configuration information of the first-type mobility, the first information can be indication information associated with the second-type mobility.

In one example, in a case that the first-type mobility is LTM and the second-type mobility is conditional reconfiguration, the first information is carried in the configuration information of LTM, then the first information can be a configuration identifier associated with the conditional reconfiguration, such as: condReconfigId.

In one example, in a case that the first-type mobility is conditional reconfiguration and the second-type mobility is LTM, the first information is carried in the configuration information of the conditional reconfiguration, then the first information is a configuration identifier associated with LTM, such as: ltm-CandidateId.

In some embodiments, the configuration information of the first-type mobility can further include second information, and the second information is a configuration identifier of the mobility configuration corresponding to the first-type mobility. In one example, in a case that the first-type mobility is LTM, the second information can be a configuration identifier of the mobility configuration of LTM, such as ltm-CandidateId. In one example, in a case that the first-type mobility is conditional reconfiguration, the second information can be a configuration identifier of the mobility configuration of the conditional reconfiguration, such as condReconfigId.

In one example, in a case that the first-type mobility is LTM, the configuration information of LTM can include the first information and the second information, such as, the configuration information of LTM (e.g., LTM-Candidate) includes the first information (e.g., condReconfigId) and the second information (e.g., ltm-CandidateId).

In one example, in a case that the first-type mobility is conditional reconfiguration, the configuration information of the conditional reconfiguration can include the first information and the second information. For example, the configuration information of the conditional reconfiguration (e.g., CondReconfigToAddMod) includes the first information (e.g., ltm-CandidateId) and the second information (e.g., condReconfigId).

In some embodiments, the above mobility configuration can be a candidate configuration, such as a candidate configuration corresponding to a candidate cell (or candidate cell group).

In some embodiments, the above mobility configuration can be an execution condition of the mobility, such as an execution condition corresponding to condition-based LTM, and an execution condition corresponding to the conditional reconfiguration.

In some embodiments, the above mobility configuration can further be other mobility configurations that can be reused by the first-type mobility and the second-type mobility, such as a measurement configuration, and the present disclosure does not make limitations on this.

In some embodiments, when the following conditions are satisfied, the network device configures the first information for the terminal.

In some embodiments, the above conditions can include at least one of the following:
Condition 1: the terminal device and/or the network device supports the mobility configuration corresponding to the first-type mobility being associated with the mobility configuration corresponding to the second-type mobility.
Condition 2: a first-type mobility and a second-type mobility associated with a candidate cell configured by the network device support a subsequent mobility operation (e.g., subsequent mobility).
Condition 3: a candidate cell associated with the mobility configuration corresponding to the first-type mobility and a candidate cell associated with the mobility configuration corresponding to the second-type mobility are of the same cell type.
Condition 4: the mobility configuration corresponding to the first-type mobility is configured.

In some embodiments, the candidate cell in Condition 3 can also be a candidate cell group, for example: a candidate cell group associated with the mobility configuration corresponding to the first-type mobility and a candidate cell group associated with the mobility configuration corresponding to the second-type mobility are the same type of cell group.

In some embodiments, the candidate cell associated with the mobility configuration corresponding to the first-type mobility and the candidate cell associated with the mobility configuration corresponding to the second-type mobility are both a PCell or a PSCell.

In some embodiments, the candidate cell group associated with the mobility configuration corresponding to the first-type mobility and the candidate cell group associated with the mobility configuration corresponding to the second-type mobility are both an MCG or an SCG.

In one example, Condition 3 is: the candidate cell associated with the mobility configuration corresponding to LTM and the candidate cell associated with the mobility configuration corresponding to the conditional reconfiguration are both a PCell, or are both a PSCell.

In one example, Condition 3 is: the candidate cell associated with the mobility configuration corresponding to LTM and the candidate cell associated with the mobility configuration corresponding to the conditional reconfiguration are both an MCG or an SCG.

In some embodiments, in a case that the mobility configuration corresponding to the first-type mobility is configured, the network device configures the first information for the terminal. If the first information is carried in the configuration information of the first-type mobility, in this case, the configuration information of the second-type mobility does not carry the mobility configuration corresponding to the second-type mobility, and the first information is used for indicating that the mobility configuration corresponding to the first-type mobility can be used for the second-type mobility. Or, if the first information is carried in the configuration information of the second-type mobility, in this case, the configuration information of the second-type mobility does not carry the mobility configuration corresponding to the second-type mobility, and the first information is used for indicating that the mobility configuration corresponding to the first-type mobility can be used for the second-type mobility.

In one example, in a case that the first-type mobility is LTM and the second-type mobility is conditional reconfiguration, the above Condition 4 can be that the mobility configuration corresponding to LTM is configured.

In one example, in a case that the first-type mobility is conditional reconfiguration and the second-type mobility is LTM, the above Condition 4 can be that the mobility configuration corresponding to the conditional reconfiguration is configured.

In some embodiments, the above configuration of the conditional reconfiguration can include: a configuration of the conditional reconfiguration supporting a subsequent mobility operation (a configuration of a first-type conditional reconfiguration) and a configuration of the conditional reconfiguration not supporting a subsequent mobility operation (a configuration of a second-type conditional reconfiguration).

In some embodiments, the above configuration of the conditional reconfiguration associated with the mobility configuration corresponding to LTM is the configuration of the first-type conditional reconfiguration.

In some embodiments, the network device, when configuring the configuration of LTM and the configuration of the second-type conditional reconfiguration, does not allow the same mobility configuration to be associated therewith.

In one example, condReconfigId and ltm-CandidateConfig are carried in LTM-Candidate. condRRCReconfig is not carried in CondReconfigToAddMod. In this case, condReconfigId in LTM-Candidate indicates that ltm-CandidateConfig can be used for the conditional reconfiguration.

In one example, ltm-CandidateConfig is carried in LTM-Candidate. ltm-CandidateId is carried in CondReconfigToAddMod, but condRRCReconfig is not carried. In this case, ltm-CandidateId in CondReconfigToAddMod indicates that ltm-CandidateConfig can be used for the conditional reconfiguration.

In one example, ltm-CandidateId and condRRCReconfig are carried in CondReconfigToAddMod. ltm-CandidateConfig is not carried in LTM-Candidate. In this case, ltm-CandidateId in CondReconfigToAddMod indicates that condRRCReconfig can be used for LTM.

In one example, condRRCReconfig is carried in CondReconfigToAddMod, and condReconfigId is carried in LTM-Candidate. In this case, condReconfigId in LTM-Candidate indicates that condRRCReconfig can be used for LTM.

In step S2102, the network device sends a first message.

In some embodiments, the terminal device receives the first message.

In some embodiments, the first message is used for indicating that the terminal device, in a case that the first message is received, performs the second-type mobility.

In some embodiments, the network device sends a second message, where the second message is used for indicating the terminal device to, in a case that the second message is received, perform the first-type mobility.

In one example, the first message is a medium access control (MAC) control element (CE), or the first message is a physical (PHY) layer message. The first message is used for triggering the terminal device to perform a corresponding mobility operation.

In some embodiments, the terminal device receives the first message, and step S2103 is performed.

In some embodiments, step S2102 can be omitted. In a case that step S2102 is omitted, the terminal device can perform step S2103 when an execution condition of the mobility is satisfied.

In some embodiments, the above first-type mobility can be conditional reconfiguration, and the second-type mobility can be LTM.

In some embodiments, the above first-type mobility can be LTM, and the second-type mobility can be conditional reconfiguration.

Certainly, the first-type mobility and the second-type mobility can also be other cases, and the present disclosure does not make limitations on this.

In step S2103, the terminal device performs the second-type mobility based on the mobility configuration corresponding to the first-type mobility.

In some embodiments, in a case that the terminal device receives the first message used for triggering the second-type mobility, or in a case that the terminal device satisfies a condition for performing the second-type mobility, the terminal device performs the second-type mobility based on the mobility configuration corresponding to the first-type mobility.

In some embodiments, in a case that the configuration information of the first-type mobility includes the first information and the mobility configuration corresponding to the first-type mobility, the terminal device performs the second-type mobility based on the mobility configuration corresponding to the first-type mobility.

In some embodiments, in a case that the configuration information of the first-type mobility includes the first information and the configuration information of the second-type mobility carries the mobility configuration corresponding to the second-type mobility, the terminal device performs the second-type mobility based on the mobility configuration corresponding to the second-type mobility.

In some embodiments, in a case that the terminal device receives the second message used for triggering the first-type mobility, or in a case that the terminal device satisfies a condition for performing the first-type mobility, the terminal device performs the first-type mobility based on the mobility configuration corresponding to the first-type mobility.

In some embodiments, in a case that the configuration information of the first-type mobility includes the first information and the mobility configuration corresponding to the first-type mobility, the terminal device performs the first-type mobility based on the mobility configuration corresponding to the first-type mobility.

In some embodiments, in a case that the configuration information of the first-type mobility includes the first information and the configuration information of the second-type mobility carries the mobility configuration corresponding to the second-type mobility, the terminal device performs the first-type mobility based on the mobility configuration corresponding to the second-type mobility.

In some embodiments, the triggering of the first-type mobility and the triggering of the second-type mobility can be triggered based on a condition, or can be triggered based on signaling associated with the first-type mobility or the second-type mobility.

In some embodiments, the mobility configuration is a candidate configuration, for example, a candidate configuration corresponding to a candidate cell (or candidate cell group).

In some embodiments, in a case that the terminal device successfully accesses a candidate cell by performing the second-type mobility, step S2104 is performed.

In some embodiments, in a case that the terminal device successfully accesses a candidate cell by performing the first-type mobility, step S2104 is performed.

In step S2104, the terminal device deletes the configuration information of the first-type mobility.

In some embodiments, in a case that the terminal device successfully accesses a candidate cell by performing the first-type mobility, the terminal device deletes the configuration information of the first-type mobility. Deleting the configuration information of the first-type mobility can also be understood as discarding the configuration information, or deactivating the configuration information.

In some embodiments, when the terminal device satisfies the following conditions, the terminal device can delete the configuration information of the first-type mobility.

For example, the above conditions include, but are not limited to, one of the following.
(1) The terminal device is in an idle state.
(2) The terminal device is in a deactivated state.
(3) The terminal device performs RRC reestablishment.
(4) The terminal device performs primary cell change.
(5) The terminal device performs primary secondary cell addition.
(6) The terminal device performs primary secondary cell change.
(7) The terminal device performs secondary cell group release, etc.
(8) The terminal device performs master cell group change.
(9) The terminal device performs secondary cell group change.
(10) The terminal device performs handover.
(11) The terminal device performs CHO.
(12) The terminal device performs CPA.
(13) The terminal device performs CPC.
(14) The terminal device performs LTM.

In some embodiments, in a case that the terminal device deletes the mobility configuration corresponding to the first-type mobility, step S2105 can be performed.

In some embodiments, the above first-type mobility can be conditional reconfiguration, and the second-type mobility can be LTM.

In some embodiments, the above first-type mobility can be LTM, and the second-type mobility can be conditional reconfiguration.

In step S2105, the terminal device deletes the configuration information of the second-type mobility.

In some embodiments, the mobility configuration includes at least one of: a candidate configuration and an execution condition.

In some embodiments, if the configuration information of the first-type mobility includes the first information and the mobility configuration corresponding to the first-type mobility, and the first information indicates that the mobility configuration corresponding to the first-type mobility is associated with the second-type mobility, then in a case that the terminal device deletes the configuration information of the first-type mobility, the terminal device deletes the configuration information of the second-type mobility that is associated with the first information.

In one example, the first-type mobility is LTM, the second-type mobility is conditional reconfiguration, the configuration information of LTM carries the mobility configuration corresponding to LTM and the first information, and the first information indicates that the mobility configuration corresponding to LTM can be used for the conditional reconfiguration, then in a case that the configuration information of LTM is deleted, the configuration information of the conditional reconfiguration that is associated with the first information is deleted.

In one example, the first-type mobility is conditional reconfiguration, the second-type mobility is LTM, the configuration information of the conditional reconfiguration carries the mobility configuration corresponding to the conditional reconfiguration and the first information, the configuration information of LTM does not carry the mobility configuration corresponding to LTM, and the first information indicates that the mobility configuration corresponding to the conditional reconfiguration can be used for LTM, then in a case that the configuration information of the conditional reconfiguration is deleted, the configuration information of LTM that is associated with the first information is deleted.

In some embodiments, if the configuration information of the first-type mobility includes the mobility configuration corresponding to the first-type mobility, and the configuration information of the second-type mobility includes the first information, and the first information indicates that the mobility configuration corresponding to the first-type mobility is associated with the second-type mobility, then in a case that the terminal device deletes the configuration information of the first-type mobility, the terminal device deletes the configuration information of the second-type mobility.

In one example, the first-type mobility is LTM, the second-type mobility is conditional reconfiguration, the configuration information of LTM carries the mobility configuration corresponding to LTM, the configuration information of the conditional reconfiguration carries the first information, and the first information indicates that the mobility configuration corresponding to LTM can be used for the conditional reconfiguration, then in a case that the configuration information of LTM is deleted, the configuration information of the conditional reconfiguration associated with the first information is deleted.

In one example, the first-type mobility is conditional reconfiguration, the second-type mobility is LTM, the configuration information of the conditional reconfiguration carries the mobility configuration corresponding to the conditional reconfiguration, the configuration information of LTM carries the first information, and the first information indicates that the mobility configuration of the conditional reconfiguration can be used for LTM, then in a case that the configuration information of the conditional reconfiguration is deleted, the configuration information of LTM associated with the first information is deleted.

In some embodiments, the second mobility configuration is a mobility configuration not supporting a subsequent mobility operation.

In some embodiments, the second mobility configuration is a mobility configuration supporting a subsequent mobility operation.

The communication method involved in the embodiments of the present disclosure can include at least one of step S2101 to step S2105. For example, step S2101 can be implemented as an independent embodiment. For example, step S2102 can be implemented as an independent embodiment. For example, step S2103 can be implemented as an independent embodiment. For example, step S2104 can be implemented as an independent embodiment. For example, a combination of step S2101 and step S2103 can be implemented as an independent embodiment. For example, a combination of step S2101, step S2102, and step S2103 can be implemented as an independent embodiment. For example, a combination of step S2101, step S2104, and step S2105 can be implemented as an independent embodiment. For example, a combination of step S2103, step S2104, and step S2105 can be implemented as an independent embodiment. For example, a combination of step S2104 and step S2105 can be implemented as an independent embodiment, but the present disclosure is not limited thereto.

In some embodiments, step S2104 and step S2105 can be exchanged in order or performed simultaneously.

In some embodiments, step S2102, step S2103, step S2104, and step S2105 are optional, and in different embodiments, one or more of these steps can be omitted or replaced.

In some embodiments, step S2101, step S2102, and step S2103 are optional, and in different embodiments, one or more of these steps can be omitted or replaced.

In some embodiments, in a case that the combination of step S2101 and step S2103 can be implemented as an independent embodiment, a schematic interaction diagram of the terminal and the network device is as shown in (b) of FIG. 2A.

In some embodiments, in a case that the combination of step S2101, step S2102, and step S2103 can be implemented as an independent embodiment, a schematic interaction diagram of the terminal and the network device is as shown in (c) of FIG. 2A.

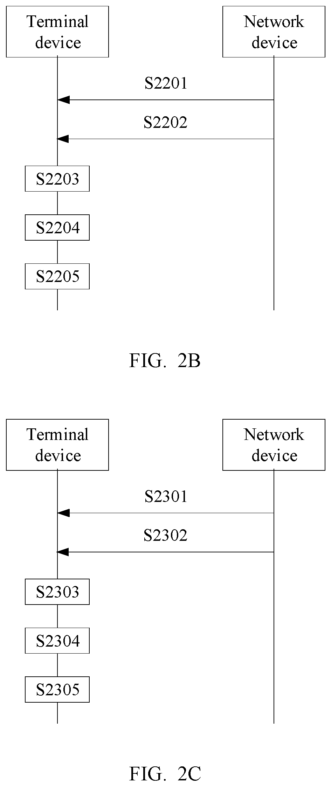

FIG. 2B is a second schematic interaction diagram of a communication method according to an embodiment of the present disclosure. As shown in FIG. 2B, the embodiment of the present disclosure relates to a communication method, and the method includes step S2201 to step S2205.

In step S2201, the network device sends first information.

For optional implementations of step S2201, reference can be made to the optional implementations of step S2101 in FIG. 2A and other associated parts in the embodiments involved in FIG. 2A, which will not be repeated here.

In step S2202, the network device sends a first message.

For optional implementations of step S2202, reference can be made to the optional implementations of step S2102 in FIG. 2A and other associated parts in the embodiments involved in FIG. 2A, which will not be repeated here.

In step S2203, the terminal device performs the second-type mobility based on the mobility configuration corresponding to the first-type mobility.

For optional implementations of step S2203, reference can be made to the optional implementations of step S2103 in FIG. 2A and other associated parts in the embodiments involved in FIG. 2A, which will not be repeated here.

In step S2204, the terminal device deletes the configuration information of the first-type mobility.

For optional implementations of step S2204, reference can be made to the optional implementations of step S2104 in FIG. 2A and other associated parts in the embodiments involved in FIG. 2A, which will not be repeated here.

In step S2205, the terminal device deletes the first information in the configuration information of the second-type mobility.

In some embodiments, the configuration information of the second-type mobility includes the first information and the mobility configuration corresponding to the second-type mobility, and the first information indicates not to use the mobility configuration corresponding to the second-type mobility to perform the second-type mobility, but to use the mobility configuration corresponding to the first-type mobility to perform the second-type mobility. In this case, if the mobility configuration corresponding to the first-type mobility is deleted, the first information in the configuration information of the second-type mobility is deleted.

In this case, it indicates that the association relationship between the mobility configuration corresponding to the first-type mobility and the second-type mobility is released, and in a case that the second-type mobility is triggered, the mobility configuration in the configuration information of the second-type mobility is used to perform the second-type mobility.

For example, the above second-type mobility supports a subsequent mobility operation.

The communication method involved in the embodiments of the present disclosure can include at least one of step S2201 to step S2205. For example, step S2201 can be implemented as an independent embodiment. For example, step S2202 can be implemented as an independent embodiment. For example, step S2203 can be implemented as an independent embodiment. For example, step S2204 can be implemented as an independent embodiment. For example, a combination of step S2201 and step S2203 can be implemented as an independent embodiment. For example, a combination of step S2201, step S2202, and step S2203 can be implemented as an independent embodiment. For example, a combination of step S2201, step S2204, and step S2205 can be implemented as an independent embodiment. For example, a combination of step S2203, step S2204, and step S2205 can be implemented as an independent embodiment. For example, a combination of step S2204 and step S2205 can be implemented as an independent embodiment, but the present disclosure is not limited thereto.

In some embodiments, step S2204 and step S2205 can be exchanged in order or performed simultaneously.

In some embodiments, step S2202, step S2203, step S2204, and step S2205 are optional, and in different embodiments, one or more of these steps can be omitted or replaced.

In some embodiments, step S2201, step S2202, and step S2203 are optional, and in different embodiments, one or more of these steps can be omitted or replaced.

FIG. 2C is a third schematic interaction diagram of a communication method according to an embodiment of the present disclosure. As shown in FIG. 2C, the embodiment of the present disclosure relates to a communication method, and the method includes step S2301 to step S2305.

In step S2301, the network device sends first information.

For optional implementations of step S2301, reference can be made to the optional implementations of step S2101 in FIG. 2A and other associated parts in the embodiments involved in FIG. 2A, which will not be repeated here.

In step S2302, the network device sends a first message.

For optional implementations of step S2302, reference can be made to the optional implementations of step S2102 in FIG. 2A and other associated parts in the embodiments involved in FIG. 2A, which will not be repeated here.

In step S2303, the terminal device performs the second-type mobility based on the mobility configuration corresponding to the first-type mobility.

For optional implementations of step S2303, reference can be made to the optional implementations of step S2103 in FIG. 2A and other associated parts in the embodiments involved in FIG. 2A, which will not be repeated here.

In step S2304, the terminal device deletes the configuration information of the first-type mobility.

For optional implementations of step S2304, reference can be made to the optional implementations of step S2104 in FIG. 2A and other associated parts in the embodiments involved in FIG. 2A, which will not be repeated here.

In step S2305, the terminal device adds the mobility configuration corresponding to the first-type mobility to the configuration information of the second-type mobility.

In some embodiments, the mobility configuration includes at least one of: a candidate configuration and an execution condition.

In some embodiments, if the configuration information of the first-type mobility includes the first information and the mobility configuration corresponding to the first-type mobility, the configuration information of the second-type mobility does not include the mobility configuration corresponding to the second-type mobility, and the first information indicates that the mobility configuration corresponding to the first-type mobility is associated with the second-type mobility, then in a case that the terminal device deletes the configuration information of the first-type mobility, the terminal device adds the mobility configuration corresponding to the first-type mobility to the configuration information of the second-type mobility associated therewith.

In one example, the first-type mobility is LTM, the second-type mobility is conditional reconfiguration, the configuration information of LTM carries the mobility configuration corresponding to LTM and the first information, the configuration information of the conditional reconfiguration does not carry the mobility configuration corresponding to the conditional reconfiguration, and the first information indicates that the mobility configuration corresponding to LTM can be used for the conditional reconfiguration, then in a case that the configuration information of LTM is deleted, the terminal device adds the mobility configuration corresponding to LTM to the configuration information of the conditional reconfiguration.

In one example, the first-type mobility is conditional reconfiguration, the second-type mobility is LTM, the configuration information of the conditional reconfiguration carries the mobility configuration corresponding to the conditional reconfiguration and the first information, the configuration information of LTM does not carry the mobility configuration corresponding to LTM, and the first information indicates that the mobility configuration corresponding to the conditional reconfiguration can be used for LTM, then in a case that the configuration information of the conditional reconfiguration is deleted, the terminal device adds the mobility configuration corresponding to the conditional reconfiguration to the configuration information of LTM.

In some embodiments, if the configuration information of the first-type mobility includes the mobility configuration corresponding to the first-type mobility, the configuration information of the second-type mobility includes the first information, and the first information indicates that the mobility configuration corresponding to the first-type mobility is associated with the second-type mobility, then in a case that the terminal device deletes the configuration information of the first-type mobility, the terminal device adds the mobility configuration corresponding to the first-type mobility to the configuration information of the second-type mobility.

In one example, the first-type mobility is LTM, the second-type mobility is conditional reconfiguration, the configuration information of LTM carries the mobility configuration corresponding to LTM, the configuration information of the conditional reconfiguration carries the first information, and the first information indicates that the mobility configuration corresponding to LTM can be used for the conditional reconfiguration, then in a case that the configuration information of LTM is deleted, the terminal device adds the mobility configuration corresponding to LTM to the configuration information of the conditional reconfiguration.

In one example, the first-type mobility is conditional reconfiguration, the second-type mobility is LTM, the configuration information of the conditional reconfiguration carries the mobility configuration corresponding to the conditional reconfiguration, the configuration information of LTM carries the first information, and the first information indicates that the mobility configuration of the conditional reconfiguration can be used for LTM, then in a case that the configuration information of the conditional reconfiguration is deleted, the terminal device adds the mobility configuration corresponding to the conditional reconfiguration to the configuration information of LTM.

The communication method involved in the embodiments of the present disclosure can include at least one of step S2301 to step S2305. For example, step S2301 can be implemented as an independent embodiment. For example, step S2302 can be implemented as an independent embodiment. For example, step S2303 can be implemented as an independent embodiment. For example, step S2304 can be implemented as an independent embodiment. For example, a combination of step S2301 and step S2303 can be implemented as an independent embodiment. For example, a combination of step S2301, step S2302, and step S2303 can be implemented as an independent embodiment. For example, a combination of step S2301, step S2304, and step S2305 can be implemented as an independent embodiment. For example, a combination of step S2303, step S2304, and step S2305 can be implemented as an independent embodiment. For example, a combination of step S2304 and step S2305 can be implemented as an independent embodiment, but the present disclosure is not limited thereto.

In some embodiments, step S2304 and step S2305 can be exchanged in order or performed simultaneously.

In some embodiments, step S2302, step S2303, step S2304, and step S2305 are optional, and in different embodiments, one or more of these steps can be omitted or replaced.

In some embodiments, step S2301, step S2302, and step S2303 are optional, and in different embodiments, one or more of these steps can be omitted or replaced.

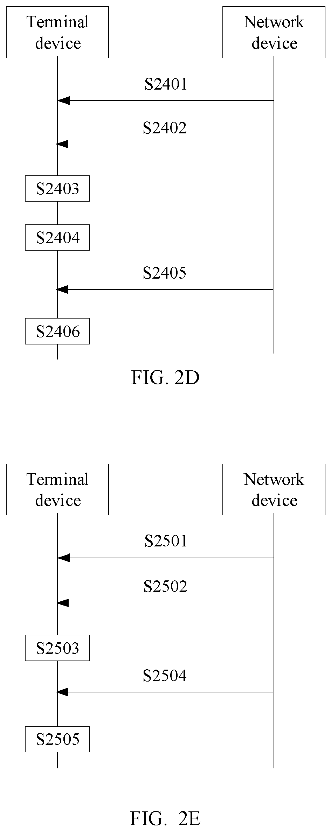

FIG. 2D is a fourth schematic interaction diagram of a communication method according to an embodiment of the present disclosure. As shown in FIG. 2D, the embodiment of the present disclosure relates to a communication method, and the method includes step S2401 to step S2406.

In step S2401, the network device sends first information.

For optional implementations of step S2401, reference can be made to the optional implementations of step S2101 in FIG. 2A and other associated parts in the embodiments involved in FIG. 2A, which will not be repeated here.

In step S2402, the network device sends a first message.

For optional implementations of step S2402, reference can be made to the optional implementations of step S2102 in FIG. 2A and other associated parts in the embodiments involved in FIG. 2A, which will not be repeated here.

In step S2403, the terminal device performs the second-type mobility based on the mobility configuration corresponding to the first-type mobility.

For optional implementations of step S2403, reference can be made to the optional implementations of step S2103 in FIG. 2A and other associated parts in the embodiments involved in FIG. 2A, which will not be repeated here.

In step S2404, the terminal device deletes the configuration information of the first-type mobility.

For optional implementations of step S2404, reference can be made to the optional implementations of step S2104 in FIG. 2A and other associated parts in the embodiments involved in FIG. 2A, which will not be repeated here.

In step S2405, the network device sends a first instruction.

In some embodiments, the terminal device receives the first instruction.

In some embodiments, the first instruction is used for indicating an operation performed on the configuration information of the second-type mobility.

In some embodiments, the operation includes: a deletion operation or an update operation.

In step S2406, the terminal device, based on the first instruction, deletes or updates the configuration information of the second-type mobility.

In some embodiments, in a case that the first instruction indicates deleting the configuration information of the second-type mobility, the terminal device deletes the configuration information of the second-type mobility. In this case, for optional implementations of step S2406, reference can be made to the optional implementations of step S2105 in FIG. 2A and other associated parts in the embodiments involved in FIG. 2A, which will not be repeated here.

In some embodiments, in a case that the first instruction indicates updating the configuration information of the second-type mobility, the terminal device updates the configuration information of the second-type mobility. In this case, for optional implementations of step S2406, reference can be made to the optional implementations of step S2205 in FIG. 2B and other associated parts in the embodiments involved in FIG. 2B, and can also be made to the optional implementations of step S2305 in FIG. 2C and other associated parts in the embodiments involved in FIG. 2C, which will not be repeated here.

In some embodiments, in a case that the first instruction indicates updating configuration information A of the second-type mobility (the configuration information A does not carry the mobility configuration corresponding to the second-type mobility), the terminal device can further send a second instruction to the network device based on the first instruction.

In some embodiments, the second instruction is used for requesting, from the network device, configuration information B of the second-type mobility. The configuration information B of the second-type mobility carries the mobility configuration corresponding to the first-type mobility.

In some embodiments, the network device receives the second instruction, and based on the second instruction, sends the mobility configuration B corresponding to the second-type mobility to the terminal device.

In some embodiments, in a case that the terminal device sends the second instruction to the network device, or the terminal device receives the mobility configuration B corresponding to the second-type mobility, the configuration information B of the second-type mobility is deleted.

The communication method involved in the embodiments of the present disclosure can include at least one of step S2401 to step S2406. For example, step S2401 can be implemented as an independent embodiment. For example, step S2402 can be implemented as an independent embodiment. For example, step S2403 can be implemented as an independent embodiment. For example, step S2404 can be implemented as an independent embodiment. For example, a combination of step S2401 and step S2403 can be implemented as an independent embodiment. For example, a combination of step S2401, step S2402, and step S2403 can be implemented as an independent embodiment. For example, a combination of step S2404, step S2405, and step S2406 can be implemented as an independent embodiment. For example, a combination of step S2401, step S2404, step S2405, and step S2406 can be implemented as an independent embodiment. For example, a combination of step S2403, step S2404, step S2405, and step S2406 can be implemented as an independent embodiment. For example, a combination of step S2405 and step S2406 can be implemented as an independent embodiment, but the present disclosure is not limited thereto.

In some embodiments, step S2404 and step S2405 can be exchanged in order.

In some embodiments, step S2402, step S2403, step S2404, step S2405, and step S2406 are optional, and in different embodiments, one or more of these steps can be omitted or replaced.

In some embodiments, step S2401, step S2402, and step S2403 are optional, and in different embodiments, one or more of these steps can be omitted or replaced.

FIG. 2E is a fifth schematic interaction diagram of a communication method according to an embodiment of the present disclosure. As shown in FIG. 2E, the embodiment of the present disclosure relates to a communication method, and the method includes step S2501 to step S2505.

In step S2501, the network device sends first information.

For optional implementations of step S2501, reference can be made to the optional implementations of step S2101 in FIG. 2A and other associated parts in the embodiments involved in FIG. 2A, which will not be repeated here.

In step S2502, the network device sends a first message.

For optional implementations of step S2502, reference can be made to the optional implementations of step S2102 in FIG. 2A and other associated parts in the embodiments involved in FIG. 2A, which will not be repeated here.

In step S2503, the terminal device performs the second-type mobility based on the mobility configuration corresponding to the first-type mobility.

For optional implementations of step S2503, reference can be made to the optional implementations of step S2103 in FIG. 2A and other associated parts in the embodiments involved in FIG. 2A, which will not be repeated here.

In step S2504, the network device sends a first instruction.

In some embodiments, the terminal device receives the first instruction.

In some embodiments, the first instruction is used for indicating an operation performed on the configuration information of the first-type mobility and the configuration information of the second-type mobility.

In some embodiments, the operation includes: a deletion operation or an update operation.

In step S2505, the terminal device, based on the first instruction, deletes the configuration information of the first-type mobility and the configuration information of the second-type mobility, or deletes the configuration information of the first-type mobility and updates the configuration information of the second-type mobility.

For optional implementations of step S2505, reference can be made to the optional implementations of step S2104 and step S2105 in FIG. 2A, the optional implementations of step S2204 and step S2205 in FIG. 2B, the optional implementations of step S2304 and step S2305 in FIG. 2C, and other associated parts in the embodiments involved in FIG. 2A, FIG. 2B, and FIG. 2C, which will not be repeated here.

The communication method involved in the embodiments of the present disclosure can include at least one of step S2501 to step S2505. For example, step S2501 can be implemented as an independent embodiment. For example, step S2502 can be implemented as an independent embodiment. For example, step S2503 can be implemented as an independent embodiment. For example, step S2504 can be implemented as an independent embodiment. For example, a combination of step S2501 and step S2503 can be implemented as an independent embodiment. For example, a combination of step S2501, step S2502, and step S2503 can be implemented as an independent embodiment. For example, a combination of step S2503, step S2504, and step S2505 can be implemented as an independent embodiment. For example, a combination of step S2504 and step S2505 can be implemented as an independent embodiment, but the present disclosure is not limited thereto.

In some embodiments, step S2503 and step S2504 can be exchanged in order.

In some embodiments, step S2502, step S2503, step S2504, and step S2505 are optional, and in different embodiments, one or more of these steps can be omitted or replaced.

In some embodiments, step S2501, step S2502, and step S2503 are optional, and in different embodiments, one or more of these steps can be omitted or replaced.

In some embodiments, the names of information, etc., are not limited to the names recited in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", "chip", etc., can be replaced with each other.

In some embodiments, terms such as "carry", "include", "comprise", etc., can be replaced with each other.

In some embodiments, terms such as "first-type mobility", "second-type mobility", "first mobility", "second mobility", etc., can be replaced with each other; terms such as "down", "downlink", "physical downlink", etc., can be replaced with each other; and terms such as "side", "sidelink", "side communication", "sidelink communication", "direct ", "direct link", "direct communication", "direct link communication", etc., can be replaced with each other.

In some embodiments, "acquire", "obtain", "get", "receive", "transmit", "bidirectional transmission", "send and/or receive" can be replaced with each other, which can be interpreted as receiving from another subject, obtaining from a protocol, obtaining from a higher layer, obtaining through self-processing, autonomous implementation, and other meanings.

In some embodiments, terms such as "send", "emit", "report", "deliver", "transmit", "request", "bidirectional transmission", "send and/or receive", etc., can be replaced with each other.

In some embodiments, terms such as "certain", "preseted", "preconfigured", "set", "indicated", "a certain", "any", "first", etc., can be replaced with each other. "A certain A", "preseted A", "preconfigured A", "set A", "indicated A", "a certain A", "any A", "first A" can be interpreted as A pre-specified in a protocol, etc., or can be interpreted as A obtained through setting, configuration, or indication, etc., or can be interpreted as a certain A, a certain A, any A, or a first A, etc., but the present disclosure is not limited thereto.

In some embodiments, a determination or judgment can be made by a value represented by 1 bit (0 or 1), or by a true-false value represented by true or false (boolean value), or by comparison of numerical values (for example, comparison with a predetermined value), but the present disclosure is not limited thereto.

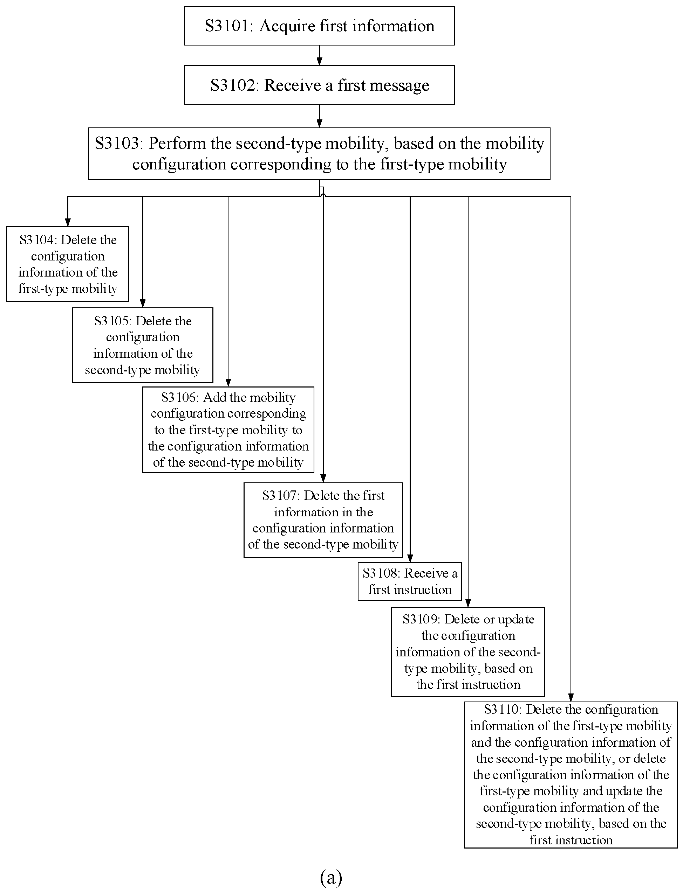

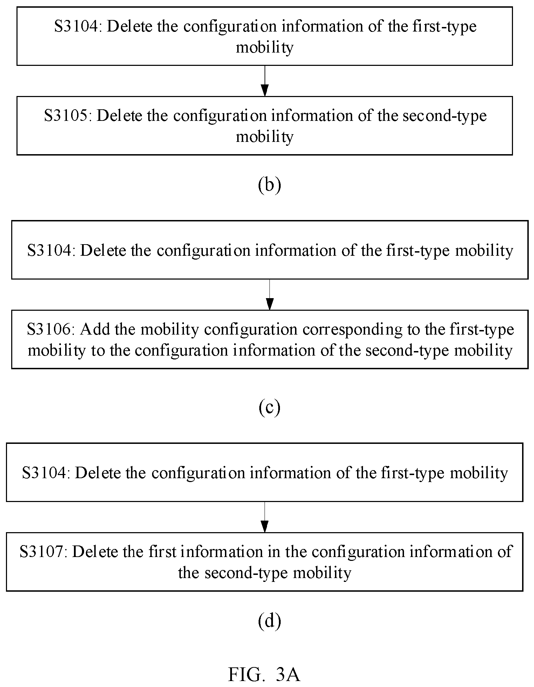

FIG. 3A is a schematic flowchart of performing a communication method by a terminal device according to an embodiment of the present disclosure. As shown in (a) of FIG. 3A, the embodiment of the present disclosure relates to a communication method, applied to the terminal device, and the method includes step S3101 to step S3110.

In step S3101, first information is acquired.

For optional implementations of step S3101, reference can be made to the optional implementations of step S2101, step S2201, step S2301, step S2401, and step S2501 in FIG. 2A to FIG. 2E and other associated parts in the embodiments involved in FIG. 2A to FIG. 2E, which will not be repeated here.

In step S3102, a first message is received.

For optional implementations of step S3102, reference can be made to the optional implementations of step S2102, step S2202, step S2302, step S2402, and step S2502 in FIG. 2A to FIG. 2E and other associated parts in the embodiments involved in FIG. 2A to FIG. 2E, which will not be repeated here.

In step S3103, based on the mobility configuration corresponding to the first-type mobility, the second-type mobility is performed.

For optional implementations of step S3103, reference can be made to the optional implementations of step S2103, step S2203, step S2303, step S2403, and step S2503 in FIG. 2A to FIG. 2E and other associated parts in the embodiments involved in FIG. 2A to FIG. 2E, which will not be repeated here.

After step S3103, at least one of the following steps is performed.

In step S3104, the configuration information of the first-type mobility is deleted.

For optional implementations of step S3104, reference can be made to the optional implementations of step S2104, step S2204, step S2304, step S2404, and step S2505 in FIG. 2A to FIG. 2E and other associated parts in the embodiments involved in FIG. 2A to FIG. 2E, which will not be repeated here.

In step S3105, the configuration information of the second-type mobility is deleted.

For optional implementations of step S3105, reference can be made to the optional implementations of step S2105, step S2406, and step S2505 in FIG. 2A, FIG. 2D, and FIG. 2E and other associated parts in the embodiments involved in FIG. 2A, FIG. 2D, and FIG. 2E, which will not be repeated here.

In step S3106, the mobility configuration corresponding to the first-type mobility is added to the configuration information of the second-type mobility.

For optional implementations of step S3106, reference can be made to the optional implementations of step S2305, step S2406, and step S2505 in FIG. 2C, FIG. 2D, and FIG. 2E and other associated parts in the embodiments involved in FIG. 2C, FIG. 2D, and FIG. 2E, which will not be repeated here.

In step S3107, the first information in the configuration information of the second-type mobility is deleted.

For optional implementations of step S3107, reference can be made to the optional implementations of step S2205 in FIG. 2B and other associated parts in the embodiments involved in FIG. 2B, which will not be repeated here.

In step S3108, a first instruction is received.

For optional implementations of step S3108, reference can be made to the optional implementations of step S2405 and step S2504 in FIG. 2D and FIG. 2E and other associated parts in the embodiments involved in FIG. 2D and FIG. 2E, which will not be repeated here.

In step S3109, based on the first instruction, the configuration information of the second-type mobility is deleted or updated.

For optional implementations of step S3109, reference can be made to the optional implementations of step S2406 in FIG. 2D and other associated parts in the embodiments involved in FIG. 2C, which will not be repeated here.

In step S3110, based on the first instruction, the configuration information of the first-type mobility and the configuration information of the second-type mobility are deleted, or the configuration information of the first-type mobility is deleted and the configuration information of the second-type mobility is updated.

For optional implementations of step S3110, reference can be made to the optional implementations of step S2505 in FIG. 2E and other associated parts in the embodiments involved in FIG. 2E, which will not be repeated here.

In some embodiments, step S3104 can be implemented alone as an embodiment.

In some embodiments, a combination of step S3104 and step S3105 can be implemented as an embodiment, as shown in (b) of FIG. 3A.

In some embodiments, a combination of step S3104 and step S3106 can be implemented as an embodiment, as shown in (c) of FIG. 3A.

In some embodiments, a combination of step S3104 and step S3107 can be implemented as an embodiment, as shown in (d) of FIG. 3A.

In some embodiments, a combination of step S3108 and step S3109 can be implemented as an embodiment.

In some embodiments, a combination of step S3104, step S3108, and step S3109 can be implemented as an embodiment.

In some embodiments, a combination of step S3108 and step S3110 can be implemented as an embodiment.

FIG. 3B is a schematic flowchart of performing a communication method by a network device according to an embodiment of the present disclosure. As shown in FIG. 3B, the embodiment of the present disclosure relates to a communication method, applied to the network device, and the method includes step S3201 to step S3203.

In step S3201, first information is sent.

For optional implementations of step S3201, reference can be made to the optional implementations of step S2101, step S2201, step S2301, step S2401, and step S2501 in FIG. 2A to FIG. 2E and other associated parts in the embodiments involved in FIG. 2A to FIG. 2E, which will not be repeated here.

In step S3202, a first message is sent.

For optional implementations of step S3202, reference can be made to the optional implementations of step S2102, step S2202, step S2302, step S2402, and step S2502 in FIG. 2A to FIG. 2E and other associated parts in the embodiments involved in FIG. 2A to FIG. 2E, which will not be repeated here.

In step S3203, a first instruction is sent.

For optional implementations of step S3203, reference can be made to the optional implementations of step S2405 and step S2504 in FIG. 2D and FIG. 2E and other associated parts in the embodiments involved in FIG. 2D and FIG. 2E, which will not be repeated here.

FIG. 4A is a schematic flowchart of performing a communication method by a terminal device according to an embodiment of the present disclosure. As shown in FIG. 4A, the embodiment of the present disclosure relates to a communication method, applied to the terminal device, and the method includes step S4101.

In step S4101, first information is received.

For optional implementations of step S4101, reference can be made to the optional implementations of step S2101, step S2201, step S2301, step S2401, and step S2501 in FIG. 2A to FIG. 2E and other associated parts in the embodiments involved in FIG. 2A to FIG. 2E, which will not be repeated here.

FIG. 4B is a schematic flowchart of performing a communication method by a network device according to an embodiment of the present disclosure. As shown in FIG. 4B, the embodiment of the present disclosure relates to a communication method, applied to the network device, and the method includes step S4201.

In step S4201, first information is sent.

For optional implementations of step S4201, reference can be made to the optional implementations of step S2101, step S2201, step S2301, step S2401, and step S2501 in FIG. 2A to FIG. 2E and other associated parts in the embodiments involved in FIG. 2A to FIG. 2E, which will not be repeated here.

In some embodiments, the network device sends the first information to the terminal device, but the present disclosure is not limited thereto, and the first information can also be sent to another subject.

In some embodiments, the first information can indicate that the mobility configuration of the conditional reconfiguration can be used for LTM.

In a first case, the configuration information of the conditional reconfiguration (e.g., CondReconfigToAddMod) carries the first information and the mobility configuration of the conditional reconfiguration, and the first information is a configuration identifier of LTM (e.g., LTM-CandidateId).

In this case, the configuration information of LTM does not carry the mobility configuration of LTM (e.g., ltm-CandidateConfig).

In this case, when LTM is triggered, the mobility configuration of the conditional reconfiguration is applied to perform LTM.

In a second case, the configuration information of LTM carries the first information, but does not carry the mobility configuration of LTM, and the first information is a configuration identifier of the conditional reconfiguration (e.g., CondReconfigId).

In this case, the configuration information of the conditional reconfiguration carries the mobility configuration of the conditional reconfiguration.

In this case, when LTM is triggered, the mobility configuration associated with the configuration identifier of the conditional reconfiguration is applied to perform LTM.

In one example, the content included in the conditional reconfiguration candidate configuration information is as follows:

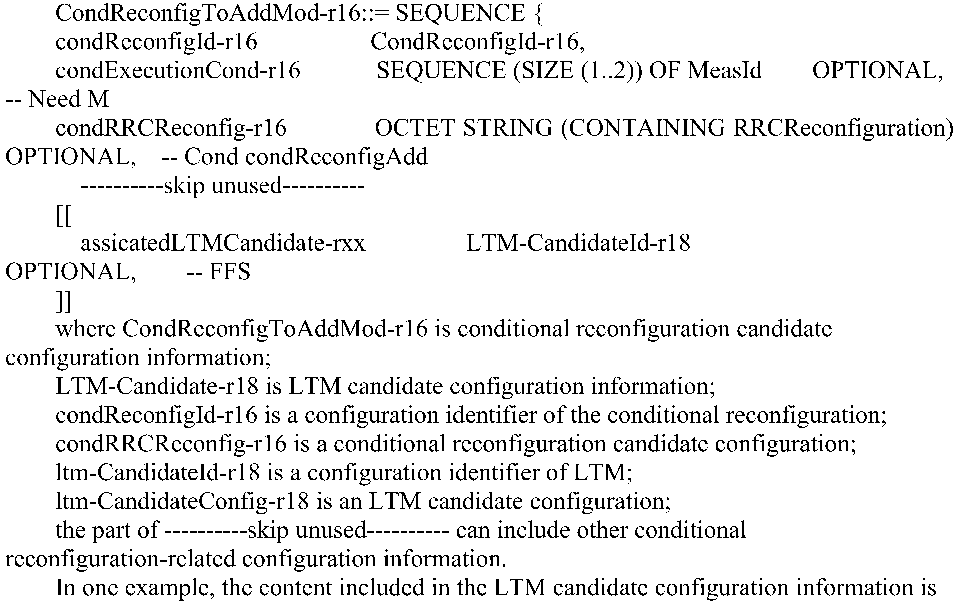

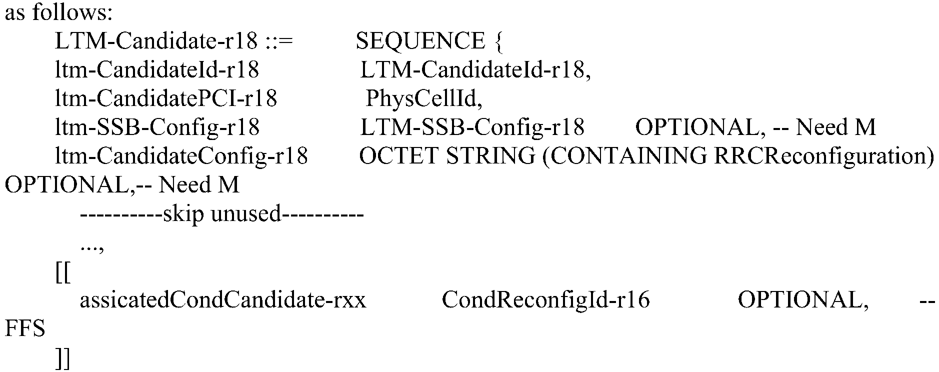

The part of ----------skip unused---------- can include other LTM-related configuration information.

In some embodiments, when the following conditions are satisfied, the network device configures the configuration identifier of LTM in the configuration information of the conditional reconfiguration. The conditions include at least one of the following.

Condition 1: the terminal device and/or the network supports the mobility configuration corresponding to the conditional reconfiguration being associated with LTM.

Condition 2: the LTM and the conditional reconfiguration corresponding to the candidate cell/candidate cell group configured by the network device support a subsequent mobility operation (subsequent mobility).

Condition 3: the candidate cells/cell groups corresponding to the LTM and the conditional reconfiguration are of the same type, for example, are all PCells, or are all PSCells, or are all a combination of a PCell and a PSCell.

Condition 4: the mobility configuration corresponding to the conditional reconfiguration has been configured to the UE (e.g., CondReconfigToAddMod includes condRRCReconfig which is not empty).

In some embodiments, in a case that the terminal device satisfies an execution condition of the conditional reconfiguration, the terminal device performs the conditional reconfiguration based on the mobility configuration of the conditional reconfiguration.

In some embodiments, in a case that the terminal device receives a layer 2 switch command, the terminal device performs LTM based on the mobility configuration of the conditional reconfiguration.

In some embodiments, the terminal device can delete the configuration information of the conditional reconfiguration (the configuration information includes the configuration identifier of LTM).

In some embodiments, the network device can also send an instruction, indicating the terminal device to delete the configuration information of the conditional reconfiguration (the configuration information includes the configuration identifier of LTM).

In some embodiments, in a case that the configuration information of the conditional reconfiguration (the configuration information includes the configuration identifier of LTM) is deleted, the terminal device deletes the configuration information of LTM.

In some embodiments, in a case that the configuration information of the conditional reconfiguration (the configuration information includes the configuration identifier of LTM) is deleted, the mobility configuration of the conditional reconfiguration is added to the configuration information of LTM.

In some embodiments, in a case that the configuration information of the conditional reconfiguration (the configuration information includes the configuration identifier of LTM) is deleted, the configuration information of LTM is updated or deleted based on an instruction sent by the network device.

In some embodiments, the first information can indicate that the mobility configuration of LTM can be used for the conditional reconfiguration.

In a first case, the configuration information of the conditional reconfiguration carries the first information, but does not carry the mobility configuration of the conditional reconfiguration, and the first information is a configuration identifier of LTM.

In this case, the configuration information of LTM carries the mobility configuration of LTM.

In this case, when the conditional reconfiguration is triggered, the mobility configuration associated with the configuration identifier of LTM is applied to perform the conditional reconfiguration.

In a second case, the configuration information of LTM carries the first information and the mobility configuration of LTM, and the first information is a configuration identifier of the conditional reconfiguration.

In this case, the configuration information of the conditional reconfiguration does not carry the mobility configuration of the conditional reconfiguration.

In this case, when the conditional reconfiguration is triggered, the mobility configuration of LTM is applied to perform the conditional reconfiguration.

In some embodiments, when the following conditions are satisfied, the network device configures the configuration identifier of the conditional reconfiguration in the configuration information of LTM. The conditions include at least one of the following.
Condition 1: the terminal device and/or the network supports the mobility configuration corresponding to LTM being associated with the conditional reconfiguration.
Condition 2: the LTM and the conditional reconfiguration corresponding to the candidate cell/candidate cell group configured by the network device support a subsequent mobility operation (subsequent mobility).
Condition 3: the candidate cells/cell groups corresponding to the LTM and the conditional reconfiguration are of the same type, for example, are all PCells, or are all PSCells, or are all a combination of a PCell and a PSCell.
Condition 4: the mobility configuration corresponding to LTM has been configured to the UE (e.g., LTM-Candidate includes ltm-CandidateConfig which is not empty).

In some embodiments, in a case that the terminal device satisfies an execution condition of the conditional reconfiguration, the terminal device performs the conditional reconfiguration based on the mobility configuration of LTM.

In some embodiments, in a case that the terminal device receives a layer 2 switch command, the terminal device performs LTM based on the mobility configuration of LTM.

In some embodiments, the terminal device can delete the configuration information of LTM (the configuration information includes the configuration identifier of the conditional reconfiguration).

In some embodiments, the network device can also send an instruction, indicating the terminal device to delete the configuration information of LTM (the configuration information includes the configuration identifier of the conditional reconfiguration).

In some embodiments, in a case that the configuration information of LTM (the configuration information includes the configuration identifier of the conditional reconfiguration) is deleted, the terminal device deletes the configuration information of the conditional reconfiguration.

In some embodiments, in a case that the configuration information of LTM (the configuration information includes the configuration identifier of the conditional reconfiguration) is deleted, the terminal adds the mobility configuration of LTM to the configuration information of the conditional reconfiguration.

In some embodiments, in a case that the configuration information of LTM (the configuration information includes the configuration identifier of the conditional reconfiguration) is deleted, the terminal device updates or deletes the configuration information of the conditional reconfiguration based on an instruction sent by the network device.

In some embodiments, the mobility configuration of the conditional reconfiguration can be divided into two types: a mobility configuration of the conditional reconfiguration supporting a subsequent mobility operation (subsequent mobility) (a mobility configuration of a first-type conditional reconfiguration); and a mobility configuration of the conditional reconfiguration not supporting a subsequent mobility operation (subsequent mobility) (a mobility configuration of a second-type conditional reconfiguration).

In some embodiments, in a case that the terminal device is in an idle state or a deactivated state (Upon going to IDLE/INACTIVE), all mobility configurations of LTM and all mobility configurations of the conditional reconfiguration are deleted.

In some embodiments, in a case that the terminal device performs RRC reestablishment (Upon RRC Reestablishment), all mobility configurations of LTM and all mobility configurations of the conditional reconfiguration are deleted.

In some embodiments, in a case that the terminal device performs primary cell change (Upon PCell change), the configuration of LTM for the MCG and the mobility configuration of the first-type conditional reconfiguration for the MCG stored by the terminal device are retained, the mobility configuration of LTM for the SCG and the mobility configuration of the first-type conditional reconfiguration for the SCG stored by the terminal device are deleted, and the mobility configuration of the second-type conditional reconfiguration is deleted.

In some embodiments, in a case that the terminal device performs primary secondary cell addition, or primary secondary cell change, or primary secondary cell release, the mobility configuration of LTM for the MCG and the SCG and the mobility configuration of the first-type conditional reconfiguration for the MCG and the SCG stored by the terminal device are retained, the mobility configuration of the second conditional reconfiguration is deleted, the mobility configuration of the second-type conditional reconfiguration for the MCG is retained, and the mobility configuration of the second-type conditional reconfiguration for the SCG is deleted.

The embodiments of the present disclosure further provide a device for implementing any one of the above methods. For example, a terminal device is provided, and the terminal device includes units or modules used for implementing the steps performed by the terminal device in any one of the above methods. For another example, a network device is provided, including units or modules used for implementing the steps performed by the network device in any one of the above methods.

It should be understood that the division of the units or modules in the above devices is merely a division of logical functions, and in actual implementation, all or part thereof can be integrated into one physical entity, or can be physically separated. In addition, the units or modules in the devices can be implemented in the form of a processor invoking software: for example, the device includes a processor, the processor is connected to a memory, the memory stores instructions, and the processor invokes the instructions stored in the memory to implement any one of the above methods or realize the functions of the units or modules in the device. The processor is, for example, a general-purpose processor, such as a Central Processing Unit (CPU) or a microprocessor, and the memory is a memory within the device or a memory outside the device. Or, the units or modules in the device can be implemented in the form of hardware circuits, and the functions of part or all of the units or modules can be realized through the design of hardware circuits. The above hardware circuits can be understood as one or more processors. For example, in one implementation, the above hardware circuit is an application-specific integrated circuit (ASIC), and through the design of the logical relationships of the components within the circuit, the functions of the above part or all of the units or modules are realized. For another example, in another implementation, the above hardware circuit can be implemented by a programmable logic device (PLD), and taking a Field Programmable Gate Array (FPGA) as an example, it can include a large number of logic gate circuits, and the connection relationships between the logic gate circuits are configured through a configuration file, thereby realizing the functions of the above part or all of the units or modules. All the units or modules of the above devices can be entirely implemented in the form of a processor invoking software, or entirely implemented in the form of hardware circuits, or partially implemented in the form of a processor invoking software with the remaining portion implemented in the form of hardware circuits.

In the embodiments of the present disclosure, the processor is a circuit having signal processing capability. In one implementation, the processor can be a circuit having instruction reading and executing capability, such as a Central Processing Unit (CPU), a microprocessor, a graphics processing unit (GPU) (which can be understood as a microprocessor), or a digital signal processor (DSP), etc. In another implementation, the processor can realize certain functions through the logical relationships of hardware circuits, and the logical relationships of the above hardware circuits are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to realize the configuration of the hardware circuit can be understood as a process of the processor loading instructions to realize the functions of the above part or all of the units or modules. In addition, it can further be a hardware circuit designed for artificial intelligence, which can be understood as an ASIC, such as a Neural Network Processing Unit (NPU), a Tensor Processing Unit (TPU), a Deep learning Processing Unit (DPU), etc.

FIG. 5 is a schematic structural diagram of a communication device provided by an embodiment of the present disclosure. As shown in FIG. 5, a communication device 5100 can include: a transceiver module 5101. In some embodiments, the transceiver module 5101 is configured to receive first information, where the first information is associated with a mobility configuration corresponding to a first-type mobility and a mobility configuration corresponding to a second-type mobility. In this case, the transceiver module 5101 can be understood as a first transceiver module. In some embodiments, the transceiver module 5101 is configured to perform at least one of communication steps such as sending and/or receiving (for example, step S3101, step 3102) performed by the terminal device in any one of the above methods, which will not be repeated here.

In some embodiments, the transceiver module 5101 can further be configured to send first information, where the first information is associated with a mobility configuration corresponding to a first-type mobility and a mobility configuration corresponding to a second-type mobility. In this case, the transceiver module 5101 can be understood as a second transceiver module. In some embodiments, the transceiver module 5101 is configured to perform at least one of communication steps such as sending and/or receiving (for example, step S3201) performed by the network device in any one of the above methods, which will not be repeated here.

In some embodiments, the transceiver module 5101 can include a sending module and/or a receiving module, and the sending module and the receiving module can be separate or integrated together. Optionally, the transceiver module 5101 can be replaced with a transceiver.

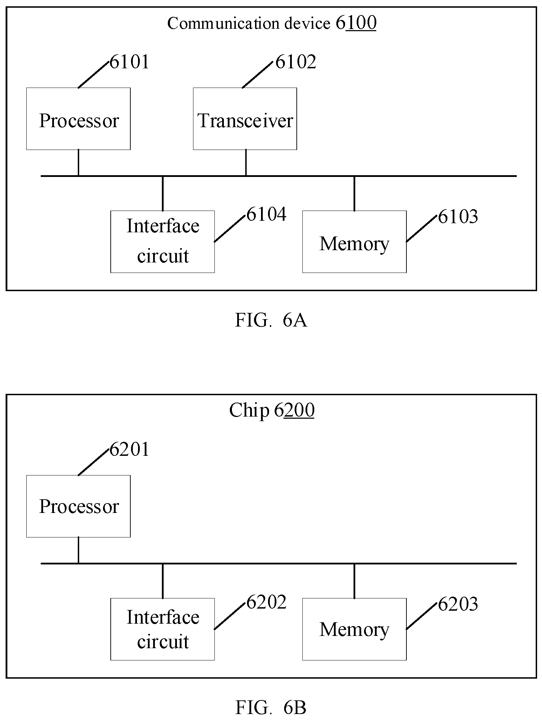

FIG. 6A is a schematic structural diagram of a communication device provided by an embodiment of the present disclosure. The communication device 6100 can be a network device (for example, a base station), or can be a terminal device (for example, a user equipment, etc.), or can be a chip, a chip system, or a processor, etc., supporting the communication device to implement any one of the above methods, or can also be a chip, a chip system, or a processor, etc., supporting the terminal to implement any one of the above methods. The communication device 6100 can be used for implementing the methods described in the above method embodiments, and for details, reference can be made to the description in the above method embodiments.

As shown in FIG. 6A, the communication device 6100 includes one or more processors 6101. The processor 6101 can be a general-purpose processor or a dedicated processor, etc., for example, can be a baseband processor or a central processing unit. The baseband processor can be used for processing communication protocols and communication data, and the central processing unit can be used for controlling a network node (such as a base station, a baseband chip, a terminal device, a terminal device chip, a DU or a CU, etc.), executing programs, and processing data of the programs. Optionally, the communication device 6100 is configured to perform any one of the above methods. Optionally, the one or more processors 6101 are configured to invoke instructions to cause the communication device 6100 to perform any one of the above methods.

In some embodiments, the communication device 6100 further includes one or more transceivers 6102. When the communication device 6100 includes one or more transceivers 6102, the transceiver 6102 performs at least one of communication steps such as sending and/or receiving (for example, step S2101, step S2102, step S2201, step S2202, step S2301, step S2302, step S2401, step S2402, step S2405, step S2501, step S2502, step S2504, but not limited thereto) in the above methods, and the processor 6101 performs at least one of other steps (for example, step S2103, step S2104, step S2105, step S2203, step S2204, step S2205, step S2303, step S2304, step S2305, step S2403, step S2404, step S2406, step S2503, step S2505, but not limited thereto). In optional embodiments, the transceiver can include a receiver and/or a sender, and the receiver and the sender can be separate or integrated together. Optionally, terms such as transceiver, transceiver unit, transceiver machine, transceiver circuit, interface circuit, interface, etc., can be replaced with each other; terms such as sender, sender unit, sender machine, sender circuit, etc., can be replaced with each other; and terms such as receiver, receiver unit, receiver machine, receiver circuit, etc., can be replaced with each other.

In some embodiments, the communication device 6100 further includes one or more memories 6103 for storing data. Optionally, all or part of the memory 6103 can also be located outside the communication device 6100. In optional embodiments, the communication device 6100 can include one or more interface circuits 6104. Optionally, the interface circuit 6104 is connected to the memory 6103, and the interface circuit 6104 can be used for receiving data from the memory 6103 or other apparatuses, and can be used for sending data to the memory 6103 or other apparatuses. For example, the interface circuit 6104 can read data stored in the memory 6103 and send the data to the processor 6101.

The communication device 6100 described in the above embodiments can be a network device or a terminal, but the scope of the communication device 6100 described in the present disclosure is not limited thereto, and the structure of the communication device 6100 may not be limited by FIG. 6A. The access network device can be an independent device or can be part of a larger device. For example, the terminal device can be: (1) an independent integrated circuit IC, or a chip, or a chip system or subsystem; (2) a set having one or more ICs, optionally, the above IC set can also include a storage component for storing data and programs; (3) an ASIC, such as a modem (Modem); (4) a module that can be embedded in other devices; (6) a receiver, a terminal device, an intelligent terminal device, a cellular phone, a wireless device, a handset, a mobile unit, a vehicle-mounted device, a network device, a cloud device, an artificial intelligence device, etc.; (6) others, etc.

FIG. 6B is a schematic structural diagram of a chip provided by an embodiment of the present disclosure. For the case where the communication device 6100 can be a chip or a chip system, reference can be made to the schematic structural diagram of a chip 6200 shown in FIG. 6B, but the present disclosure is not limited thereto.

The chip 6200 includes one or more processors 6201. The chip 6200 is configured to perform any one of the above methods.

In some embodiments, the chip 6200 further includes one or more interface circuits 6202. Optionally, terms such as interface circuit, interface, transceiver pin, etc., can be replaced with each other. In some embodiments, the chip 6200 further includes one or more memories 6203 for storing data. Optionally, all or part of the memory 6203 can be located outside the chip 6200. Optionally, the interface circuit 6202 is connected to the memory 6203, and the interface circuit 6202 can be used for receiving data from the memory 6203 or other apparatuses, and the interface circuit 6202 can be used for sending data to the memory 6203 or other apparatuses. For example, the interface circuit 6202 can read data stored in the memory 6203 and send the data to the processor 6201.

In some embodiments, the interface circuit 6202 performs at least one of communication steps such as sending and/or receiving in the above methods. The interface circuit 6202 performing communication steps such as sending and/or receiving in the above methods refers to, for example: the interface circuit 6202 performing data interaction between the processor 6201, the chip 6200, the memory 6203, or a transceiver device.

The modules and/or devices described in the embodiments of the virtual apparatus, the physical apparatus, the chip, etc., can be arbitrarily combined or separated according to circumstances. Optionally, part or all of the steps can also be performed cooperatively by multiple modules and/or devices, and the present disclosure does not make limitations on this.

The present disclosure further provides a storage medium, where the storage medium stores instructions, and when the instructions are run on the communication device 6100, causing the communication device 6100 to perform any one of the above methods. Optionally, the above storage medium is an electronic storage medium. Optionally, the above storage medium is a computer-readable storage medium, but is not limited thereto, and it can also be a storage medium readable by other apparatuses. Optionally, the above storage medium can be a non-transitory storage medium, but is not limited thereto, and it can also be a transitory storage medium.

The embodiments of the present disclosure further provide a program product, and when the program product is executed by the communication device 6100, causing the communication device 6100 to perform any one of the above methods. Optionally, the above program product is a computer program product.

The embodiments of the present disclosure further provide a computer program, and when the computer program is run on a computer, causing the computer to perform any one of the above methods.

## Claims

1. A communication method, applied to a terminal device, comprising:
receiving first information, wherein the first information is associated with a mobility configuration corresponding to a first-type mobility and a mobility configuration corresponding to a second-type mobility.

2. The method according to claim 1, wherein the first information is carried in configuration information of the first-type mobility, and the first information is used to indicate that the mobility configuration corresponding to the first-type mobility is associated with the second-type mobility, or the first information is used to indicate that the mobility configuration corresponding to the second-type mobility is associated with the first-type mobility.

3. The method according to claim 2, wherein the mobility configuration corresponding to the first-type mobility is further carried in the configuration information of the first-type mobility, and the first information is used to indicate that the mobility configuration corresponding to the first-type mobility is associated with the second-type mobility.

4. The method according to claim 2 or 3, further comprising:
in a case that the second-type mobility is triggered, performing the second-type mobility based on the mobility configuration corresponding to the first-type mobility.

5. The method according to claim 2, wherein the mobility configuration corresponding to the second-type mobility is carried in configuration information of the second-type mobility, and the first information is used to indicate that the mobility configuration corresponding to the second-type mobility is associated with the first-type mobility.

6. The method according to claim 2 or 5, further comprising:
in a case that the first-type mobility is triggered, performing the first-type mobility based on the mobility configuration corresponding to the second-type mobility.

7. The method according to any one of claims 1 to 6, wherein in a case that at least one of following conditions is satisfied, the first information is configured:
the terminal device and/or a network device supports the first information being associated with the mobility configuration corresponding to the first-type mobility and the mobility configuration corresponding to the second-type mobility;
a first-type mobility and a second-type mobility associated with a candidate cell configured by the network device support a subsequent mobility operation;
a candidate cell associated with the mobility configuration corresponding to the first-type mobility and a candidate cell associated with the mobility configuration corresponding to the second-type mobility are the same type of cell;
the mobility configuration corresponding to the first-type mobility is configured; and
the mobility configuration corresponding to the second-type mobility is configured.

8. The method according to any one of claims 1 to 7, wherein the first-type mobility is a condition-triggered layer 3 mobility, and the second-type mobility is a layer 1 or layer 2 triggered mobility; or, the first-type mobility is a layer 1 or layer 2 triggered mobility, and the second-type mobility is a condition-triggered layer 3 mobility.

9. The method according to any one of claims 1 to 8, wherein the first-type mobility supports a subsequent mobility operation;
in a case that the terminal device successfully accesses a candidate cell by performing the first-type mobility, the method further comprises at least one of:
deleting configuration information of the first-type mobility;
deleting configuration information of the second-type mobility;
adding the mobility configuration corresponding to the first-type mobility to the configuration information of the second-type mobility; and
adding the mobility configuration corresponding to the second-type mobility to the configuration information of the first-type mobility;
wherein the mobility configuration corresponding to the first-type mobility is associated with the mobility configuration corresponding to the second-type mobility.

10. The method according to any one of claims 1 to 9, wherein the first-type mobility supports a subsequent mobility operation;
and the method further comprises:
receiving a first instruction, wherein the first instruction is used to indicate at least one of:
deleting configuration information of the first-type mobility;
deleting configuration information of the second-type mobility;
updating the configuration information of the first-type mobility; and
updating the configuration information of the second-type mobility.

11. The method according to any one of claims 1 to 10, wherein the mobility configuration comprises at least one of: a candidate configuration and an execution condition.

12. A communication method, applied to a network device, comprising:
sending first information, wherein the first information is associated with a mobility configuration corresponding to a first-type mobility and a mobility configuration corresponding to a second-type mobility.

13. The method according to claim 12, wherein the first information is carried in configuration information of the first-type mobility, and the first information is used to indicate that the mobility configuration corresponding to the first-type mobility is associated with the second-type mobility, or the first information is used to indicate that the mobility configuration corresponding to the second-type mobility is associated with the first-type mobility.

14. The method according to claim 13, wherein the mobility configuration corresponding to the first-type mobility is further carried in the configuration information of the first-type mobility, and the first information is used to indicate that the mobility configuration corresponding to the first-type mobility is associated with the second-type mobility.

15. The method according to claim 13 or 14, wherein the mobility configuration corresponding to the first-type mobility is used for, in a case that the second-type mobility is triggered, performing the second-type mobility.

16. The method according to claim 13, wherein the mobility configuration corresponding to the second-type mobility is carried in configuration information of the second-type mobility, and the first information is used to indicate that the mobility configuration corresponding to the second-type mobility is associated with the first-type mobility.

17. The method according to claim 13 or 16, wherein the mobility configuration corresponding to the second-type mobility is used for, in a case that the first-type mobility is triggered, performing the first-type mobility.

18. The method according to any one of claims 12 to 17, wherein in a case that at least one of following conditions is satisfied, the first information is configured:
the terminal device and/or the network device supports the first information being associated with the mobility configuration corresponding to the first-type mobility and the mobility configuration corresponding to the second-type mobility;
a first-type mobility and a second-type mobility associated with a candidate cell configured by the network device support a subsequent mobility operation;
a candidate cell associated with the mobility configuration corresponding to the first-type mobility and a candidate cell associated with the mobility configuration corresponding to the second-type mobility are the same type of cell;
the mobility configuration corresponding to the first-type mobility is configured; and
the mobility configuration corresponding to the second-type mobility is configured.

19. The method according to any one of claims 12 to 18, wherein the first-type mobility is a condition-triggered layer 3 mobility, and the second-type mobility is a layer 1 or layer 2 triggered mobility; or, the first-type mobility is a layer 1 or layer 2 triggered mobility, and the second-type mobility is a condition-triggered layer 3 mobility.

20. The method according to any one of claims 12 to 19, wherein the first-type mobility supports a subsequent mobility operation;
and the method further comprises:
sending a first instruction, wherein the first instruction is used to indicate at least one of:
the terminal device deleting the mobility configuration corresponding to the first-type mobility;
the terminal device deleting the mobility configuration corresponding to the second-type mobility;
the terminal device updating the mobility configuration corresponding to the first-type mobility; and
the terminal device updating the mobility configuration corresponding to the second-type mobility.

21. The method according to any one of claims 12 to 20, wherein the mobility configuration comprises at least one of: a candidate configuration and an execution condition.

22. A terminal device, comprising:
a first transceiver module, configured to receive first information, wherein the first information is associated with a mobility configuration corresponding to a first-type mobility and a mobility configuration corresponding to a second-type mobility.

23. A network device, comprising:
a second transceiver module, configured to send first information, wherein the first information is associated with a mobility configuration corresponding to a first-type mobility and a mobility configuration corresponding to a second-type mobility.

24. A terminal device, comprising:
one or more processors;
wherein the terminal device is configured to perform the communication method according to any one of claims 1 to 11.

25. A network device, comprising:
one or more processors;
wherein the terminal device is configured to perform the communication method according to any one of claims 12 to 21.

26. A communication system, comprising a terminal device and a network device, wherein the terminal device is configured to implement the communication method according to any one of claims 1 to 11; and the network device is configured to implement the communication method according to any one of claims 12 to 21.

27. A storage medium storing instructions, wherein the instructions, when run on a terminal device or a network device, cause the terminal device or the network device to perform the communication method according to any one of claims 1 to 21.
